# EUROPEAN PATENT APPLICATION

(11) **EP 1 993 068 A2**
(43) Date of publication of application: **19.11.2008**
(21) Application number: 08159963.1
(22) Date of filing: 28.11.2001
(51) Int. Cl.: G06Q 30/00

(54) **System and method for displaying and selling goods and services in a retail environment employing electronic shopper aids**

(30) Priority: 28.11.2000 US 253112 P; 03.04.2001 US 823999; 28.11.2001 US 994805
(62) Divisional of application: 01987114.4
(71) Applicant: The Pugliese Company, Boca Raton, FL 33431 (US)
(72) Inventor: Pugliese, Anthony V. III, Boca Raton, FL 33432 (US); Pugliese, Anthony V. IV, Delray Beach, FL 33444 (US); Angulo Richard, Pembroke Pines, FL 33024 (US)
(74) Representative: Laub, Alexander

(57) **Abstract**

ShopLive system supports existing merchants and malls to better serve customers by providing easy access to merchandise and sales assistants over a communication network to display items and to provide expert information on products. The shopping experience is enhanced by tokens to allow ease of shopping and checkout. Items purchased that need installation or service or supported by accessing live experts. Direct connection to service providers is available over the network. If a shopper does not find the desired merchandise they are referred to another merchant who has the product and the referring merchants receives a communication or other consideration.

## Description

### TECHNICAL FIELD

This invention relates to electronic commerce. Specifically, this invention relates to information processing methods for marketing and selling goods and services using the Internet or other interactive communications network to support live shopping and selling experience.

### BACKGROUND ART

Current online shopping is basically a catalog operation where the shopper visits an e-store or collection of e-stores in an e-mall. The shopper navigates by lists or keyword search through the e-mall site each with a different user interface that may be unfamiliar to the user. The user is presented with scripted presentations including text and video to learn about merchandise. Some sites access merchandise through static video cameras that view a store location. Some of these cameras scan the merchandise displays including pan, tilt and zoom views. They may also present still pictures. They do not interact with the store personnel. Streaming videos are also used to display merchandise. The shopper then uses the web site to select products and to pay. The shopper must navigate through the web site. The result is frustration with the shopping experience and abandoning the attempt to make a purchase.

Another problem faced by online merchants is an inability to efficiently attract potential consumers to their web sites. Television, Internet and newspaper advertisements are used to drive traffic. The effort and the infrastructure required to support it is very expensive and may drive some online merchants out of business. Add to this, the fact that web sites are centralized and not interactive at the local retail location nearest to or preferred by the shopper.

With the increasing popularity of the Internet and the World Wide Web, it has become common for merchants to set up Web sites for marketing and selling product. No one merchant can provide all the products and services to a shopper to meet shopper's interest. Related products and services may even be necessary but not offered by a given merchant. A shopper who buys a light fixture from a lighting store, for example, may need an electrician to install it. A furniture store typically does not carry the accessories that are needed to complete furnishing a room. A merchant may offer related products and services.

Two-way video services exist for teleconferences and static videos for viewing merchandise. These services have not been used to simulate an in-store retail-shopping event. A sterile presentation of merchandise without knowledgeable assistance of a sales assistant chills the buying experience. Existing Browsers aid shoppers by allowing them to click onto a site and view merchandise. An example of such a browser is that provide by Media Browser. However, it is not a live presentation and does not have the support of a sales assistant.

Frustration and lack of personal attention is the main reason for a buyer terminating an online purchase. The present invention addresses these and other problems that benefit from an interactive system with a live sales person.

### DISCLOSURE OF THE INVENTION

The invention allows online shoppers to set the criteria for their ShopLive shopping session, find ShopLive enabled brick and mortar stores that meet their criteria and obtain live audio and video assistance. Shoppers can initiate an e-sales call with a live sales person who shows them a product via networked live Internet enabled cameras and who responds to inquiries to demonstrate or display the product real-time. Shoppers have a unique experience that is liken to onsite shopping by interfacing with a live salesperson while being able to view the product from various angles as if they were viewing it in person. Other shoppers may join in the session. Shopper assistance may be also provided by automation including animation of a live sales assistant or voice recognition and response systems. Artificial intelligence may be used to animate the shopping session to simulate a live assistant or a comparable experience. All of these systems interact with the shopper in a user-friendly way mimicking a live shopping experience.

A shopper enters the ShopLive environment through a ShopLive portal. The portal can be from a home terminal, kiosk, in-store terminal, and mobile communications device or like means of accessing a communications network. A shopper may initiate an anonymous single session or log on as an enrolled shopper. Prior enrollment speeds the shopping process and provides information for assisting shopper by brand, price, etc., and promotes use of rewards, coupons, rebates and purchase now discounts or incentives. At some point in time the shopper is enrolled and a personal shopper's profile is created that may be updated over time. A shopper may also create a shopping list to define goals and even spending limits for products and services as well as a request for consultation on selections.

Shoppers in a typical shopping session establish contact with merchant(s) of a product(s), service(s), and/or intellectual asset(s) that the shopper is interested in purchasing through a centralized service or direct communication between buyer and seller. The shopper and merchant are connected over the Internet or similar telecommunications network through a live interactive audio, video and data link in real time conversational or chat mode. The shopper asks questions or describes their interest and the merchant responds and offers suggestions and alternatives, display items via video camera or like device, refers the shopper to other merchants if they do not have the requested product, service, or intellectual assets, and provides information while describing features of the item as in an in-store shopping and sales encounter. The item may be displayed for the shopper from different views. The merchant describing the item may enhance the shopping experience by describing the texture and similar products. Tactile sensors used by the shopper at her portal may simulate feel, weight and color and these same characteristics. Likewise, holographic fitting of clothing can place the item on the shopper's image to give a representation of the fit and appearance of garments. This invention provides the convenience of round-the-world on-line shopping from any location aided by the personal service of the merchant.

Just like in a store or mall, the shopper may visit several stores and make several selections to purchase as they go along. The choices are then aggregated in a single shopping cart and the shopper checks out with one purchase transaction using a single payment source such as a credit card if they so chose. Or the payment can be spilt. This one stop shopping and check out avoids surfing multiple outlets and mimics the actual shopping experience of a retail environment.

ShopLive accumulates data on purchases and presents it to merchants, mall owners, designers and manufactures for rewards programs, rebates and coupons. ShopLive also provides a ShopLive reward for the shopping site to incentivize shoppers to access merchants through it.

ShopLive has a composite data base of shopper's preferences and buying habits and from this data creates a profile from which special offers can be made for sales, limited stock items, promotions, or to meet a designated preference or request. This database accumulates merchant and payment type sales data to create a more complete shopper purchasing profile. It also accumulates data on how the shopper accesses merchants by the method of portal used to enter the ShopLive system. The database allows merchants to offer shoppers items at locations nearest them and tailor sales and promotions to fit the buying pattern of their Shopper group.

The invention utilizes the existing market infrastructure of existing brick and mortar retail stores, wholesale and distributors warehouses and manufacture distribution channels. Each part of the system does what it does best. The merchant interfaces with the consuming public and provides the mix of goods, services, and intellectual assets to their shoppers. The retailer deals with one or more wholesale/distributors who specialize in certain types of goods obtained and warehoused in quantity. Delivery of goods is through existing distribution methods using various delivery services.

ShopLive uses technology to overlay this existing infrastructure to enhance its capabilities and to provide local access to product(s), service(s), and intellectual asset(s) to the shopper and increase the retailer's reach. Broadband telecommunication networks provide the pipe through which the content supplied to the consumer is piped. Its widespread introduction makes the ShopLive experience attainable. The technology to do this is available today. Communications companies are investing heavily in faster, higher capacity networks that provide increased bandwidth capacity at an affordable price. Cable modems, Digital Subscriber Lines (xDSL) and satellite Internet connections are being made available to more and more areas. Fast Internet service will be a reality soon. The capacity of low end, affordable multimedia PCs being sold today is adequate to support a ShopLive portal and will continue to improve.

Video and 'real time' Internet technology require high-speed connections to work smoothly. Streaming video servers, proper protocol selection and other implementation decisions can provide an acceptable (and improving) experience for users, as these faster Internet connections are made available. Advances in compression software allow for the transfer of high-resolution digital video over Internet, Intranet, and other networks.

The present invention provides a software system and method for enabling an entity, referred to herein as the "merchant," to efficiently market and sell goods, services, and intellectual assets in cooperation with Web sites or other network sites of respective business partners, referred to herein as "members." Typically an entity will be both a merchant and a member. The system and method are implemented in part by software that runs on the merchant's web server / site. An entity can enroll (via an automated registration process) as a member, and can then refer shoppers for products, services, and intellectual assets sold by other member merchants. Someone shopping on a given merchant's site in need of a related or out of stock product, service, or intellectual asset not available from that merchant, is referred to another member merchant that can satisfy the shopper's needs. For example, a shopper purchasing a light fixture, from a ShopLive merchant may need an electrician to install the light. The merchant accesses a database, such as the ServeLive system, of member electricians in the customer's area and refers the customer to the electrician to install the fixture. The merchant's account is then credited with a referral fee.

Loyalty programs can be integrated into the network to increase customer satisfaction and consequently retention. ShopLive is able to consolidate the respective loyalty programs to update the shopper's rewards account.

The following examples show how the ShopLive concept can be applied to specific areas of commerce and are not to be construed as limiting in any way. All of these examples offer the shopper the choice and convenience of on-line shopping plus the advantage of interacting with live salespeople and bricks and mortar stores. The stores benefit from a larger market and pre-qualified prospective shoppers.

### ShopLive - Auctions

Auctions, both live and on-line, are very popular. ShopLive combines the excitement and immediacy of being there with the reach and convenience of the Internet. Auction items can be inspected with the live video and questions answered in real time. All auctions could take advantage of these features - art, antique, auto, real estate, livestock or closeouts.

### ShopLive - Auto

Shoppers can search for a car, truck, boat or airplane by specifying parameters for their search e.g. make, model, year, mileage/hours, location, price, etc. They are able to access specifications, reviews, comparative pricing and other pertinent information. ShapLive provides the unique ability to also be able to interact with the seller to ask questions and see details - live. Efforts can be directed to specific areas of interest. A shopper can ask to see how to remove a seat or load the trunk. Preowned vehicles can be examined for condition. Questions about maintenance and service records can be addressed. Negotiation of price and options can be done.

### ShopLive - Bank

On-line banking is given the personal touch of the branch bank for advice and direction. Personal banking can be offered to a broader market giving both the bank and the customer better service. The on-line bank can be a centralized call center offering the efficiencies of utilization and still provide personal interaction for questions relating to the banks products and services. Investment and credit questions can be addressed.

### ShopLive - Church

Church services, similar to televised services, can be offered but with significant enhancements. A small church can offer services to anyone in the world over the Internet. Members who are traveling could still attend their own service and contribute - on-line. Meetings and study groups can be joined from anywhere - interactively. Counseling and personal sessions can occur to supplement office, home and hospital visits.

### ShopLive - MateMatch

Personals are an area where the live interaction and video can enhance the experience and safety for people who are interested in developing new friends or more serious relationships.

### ShopLive - Pets

Shopping for a new pet or looking for a lost pet is a service that can benefit from the ShopLive concept. Breeders can display their offerings, explain bloodlines, and show conformation and the conditions their animals are raised in. They can also interact with interested shoppers to assess compatibility between the animal and the prospective owner. Negotiations and arrangements for pick-up or delivery can be made. These same features can be utilized for livestock. Animal shelters can also use the service to find homes for their animals and owners can see if their lost pet is a guest at the shelter.

### JobLive

The invention has other applications including creating office like settings in which prospective employees are interviewed saving the time and expense of travel and executive time. Show and Tell Centers can be used for interviews providing interactive audio and video. ShopLive kiosks are equipped with video cameras for interviews. Personnel agencies can use these same facilities to interview and coach their clients when physical meeting are not practical. Also, shoppers can post their resume and companies can post job openings.

Accordingly, an object of the invention is to enable a merchant to provide real time access to merchandise by remote viewers and to interact with them via video and audio to display products and to conduct a selling conversation with the consumer.

Another object of the invention is to create a shopping mission definition to allow shoppers access to the appropriate merchandise or service to meet their criteria.

An object of the invention is to create a Shopper profile to navigate through a shopping session to more easily accomplish the Shopper's objectives.

Yet another object is to create a transaction gateway to manage the shopping experience.

Another object of this invention is to provide live service support to the shopper for information on the product accessories, on its use and installation as appropriate.

Yet another object of the invention is to create a single shopping cart for ShopLive shoppers to fill from one or more merchants for a single check out from a shopping session.

An object of the invention to create portals for Shoppers to enter the ShopLive system that is easy to access and navigate.

Still another object of the invention is to create a convenient means of accumulating merchant and product rebate, rewards, incentives and like promotional awards from one or more shopping sessions.

Another object of the invention is to create a network of member merchants who refer customers to other member merchants when these member merchants offer complimentary or out of stock goods, services, and / or intellectual assets.

Another object of the invention provides a way for merchants to earn referral fees for referring shoppers to other merchants.

Another object of the invention is to create a knowledge base that provides information from experts (real time and stored) and reference sources to provide shoppers with domain specific knowledge selling or otherwise profiting from intellectual assets.

Another object of the invention is to create an automated system for merchants to enroll to operate as a member of referral network.

Yet another aspect of the invention is to create a portable system that allows shoppers in a physical mall to carry tokens from store to store that contains information pertinent to the shopper, the shopping session, and shopping cart.

### BRIEF DESCRIPTION OF THE DRAWINGS

These and other features and advantages of the invention are described with reference to the drawings of certain preferred embodiments, which are intended to illustrate and not to limit the invention; and in which;
Figure 1 is a schematic drawing representing the methods or channels in which information is exchanged amongst the ShopLive System participants.
Figure 2 is a schematic drawing of the implementation model for the ShopLive System.
Figure 3 is a schematic diagram for the ShopLive video session system architecture.
Figure 4 is a schematic diagram for the ShapLive shopping mission system architecture.
Figure 5 is a schematic diagram for the architecture for creating and managing the Shopper profile.
Figure 6 is a schematic diagram for the architecture enabling a shopper to interact with ShopLive Assisted Shopping.
Figure 7 is a schematic diagram for the ShopLive notification processing system architecture.
Figure 8 is schematic diagram for system architecture for a global shopping chart allowing purchases from multiple merchants.
Figure 9 is a schematic diagram for the system that manages the purchase gateway.
Figure 10 is a schematic diagram of the system for order fulfillment in one ShopLive embodiment, that of a Creations mall.
Figure 11 is a schematic diagram of a shopper's transaction gateway for accessing the ShopLive system.
Figure 12 is a schematic diagram of the common gateway for managing the information exchanges between the ShopLive system and applications the shopper session.
Figure 13 is a schematic diagram for the search engine for malls.
Figure 14 is a schematic diagram of the search API for external merchant catalogs.
Figure 15 is a schematic diagram of the system to allow a shopper access to merchant's catalogues, images, text and video image banks.
Figure 16 is a schematic diagram for a system to external inventory access via API.
Figure 17 is a schematic diagram for a purchase fulfillment system.
Figure 18 is a schematic diagram of a system to provide shopper profile information to merchants.
Figure 19 is a schematic diagram of a system to manage customer relationship services for shoppers, merchants and malls.
Figure 20 is a schematic diagram of the ShopLive administration system.
Figure 21 is a schematic diagram of the merchant administration system.
Figure 22 is a schematic diagram of the mall administration system.
Figure 23 is a schematic diagram of the ShopLive Loyalty Program.
Figure 24 is a schematic diagram of the ShopLive Auctions system.
Figure 25 is a schematic diagram of a system to manage data for the shopper nightly notification system.
Figure 26 is a schematic drawing of the implementation model for the ShopLive System within the Creations model.
Figure 27 is a schematic drawing of the Creations Camera Layout.
Figure 28 is a schematic drawing of the Creations Video Work Station Camera Kiosk.
Figure 29 is a schematic drawing of the Live Browser.
Figure 30 is a schematic drawing of the Personal Identification System.
Figure 31 is a schematic drawing of the Referral Server System.

### Definitions

The following phrases and words are used extensively through out. In order to avoid confusion and ensure consistency, the terms are defined below:
**Agent** - see SLA
**Creations** - A walk-in and Internet based shopping experience. The Creations store or retail location features leased display areas where tenants display merchandise, state of the art video cameras to support Internet video based shopping, video catalogs and a contained warehouse for fulfillment and distribution functions. Walk-in shoppers browse and shop for products using convenient computer tablets to interact with the catalog. Upon checking out and payment, the products are available for pickup. Internet based shoppers use live video technology to shop and arrange for pick-up or delivery of their purchases.
**Expert** - an individual or company that has a high level of domain expertise and sells or otherwise profits from these intellectual assets.
**Member -** a merchant (store, service provider, and/or individual) that participates in the ShopLive sales network and is registered to earn referral fees. Merchant - an individual or business that is a ShopLive enabled store, services provider, and / or expert offering goods, services, or intellectual assets to shoppers.
**Push Data** - A merchant or SLA has the ability to send data (web pages or search results) to a shopper during a video session. This action is referred to as pushing data and causes the information that is displayed on the merchant's screen to be also displayed on the shopper's terminal.
**SLA** - A ShopLive personal shopper who assists shoppers with their shopping experience through ShopLive video technology. This individual, or an animation representing a person, provides shopping assistance to the shopper via a live video session. These individuals may be referred to as SLA, video agents, SLA agents, Mall agents (video enabled agents representing the shopping malls) or ShopLive Personal Shoppers.
**Video Merchant -** A ShopLive merchant who offers the capability to shop using the ShopLive video technology.
**Video Station** - A video enabled workstation registered with the ShopLive application. The video station consists of a video camera, computer workstation and specialized application software.
**Virtual Agent -** A remote ShopLive assistant who provides personal shopping assistance using a remote computer workstation and video camera. ShopLive video allows agents to provide shopper service through remote home video stations.

### Drawing Symbols

The following symbols are used within the Data Flow Diagrams.

Function or system process. The "internal" keyword denotes an internal process. 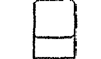 User who interacts with the ShopLive process. 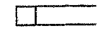 Database table or collection of data used by the process.

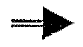 Flow of data or information within the application. 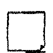 HTML or Intemet pages. 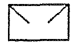 Email message sent to or from ShopLive. 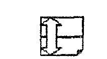 XML document used to transfer information between internal and external processes.

Shaded symbols are external to the ShopLive application or sub-system. Information is exchanged between these processes.

### Systems Overview

ShopLive consists of a number of components utilizing the following proprietary methods for data exchange to support information exchanges between the ShopLive components as well as communication with external applications.

All data exchange with external applications (external merchant catalogs, external inventory, UPS or FEDEX delivery systems) where data transfer is required, use XML. ShopLive data and requests for data are formatted as industry standard XML forms for exchange purposes. ShopLive utilizes system component for encode and decode purposes. Typical XML forms include external product searches, search results, catalog updates, delivery requests, and referral reward notices.

Credit Card transactions are handled as XML form using encrypted data and secure browser connections. The processing service provider dictates the method and format of information to be exchanged. ShopLive conforms to their published protocols.

Internal notifications are the primary method for shoppers to communicate with the ShopLive personal shoppers, merchants or mall assistants using the ShopLive video technology. The ShopLive application makes extensive use of internal notification messages for both inter and intra component communication. Messages are formatted into standard ShopLive protocols and managed via the ShopLive messaging component. The application uses a series of notification queues for message storage and delivery. Separate queues are maintained for each process requiring messaging capability. Typical message queues include:
SNQ - System Notification Queue - master messaging queue for all internal messages.
PNQ - Personal Notification Queue - notification queue created for each shopper session.
MNQ - Merchant Notification Queue - notification queue for each video merchant. Subordinate queues are created for each video station associated with a merchant location.
ANQ - Agent Notification Queue - notification queues are created for each ShopLive assistant or mall assistant as they login to the ShopLive application.
MBNQ - Member Notification Queue - notification queues are created for members of ShopLive Network.
ENQ - Expert Notification Queue - notification queues created for experts.
SVNQ - Services Notification Queue - notification queues are created for service providers.

The final method of inter-component communications is events. These are system specific blocks of data used to track the shopping session events that occur during a shopping session. Events provide a standard method of tracking the activities of a shopper during a shopping session. They provide a chronological history of the shopper's activities during a session and include, shopper entered search criteria, record of merchant visits, and requests for assistance, purchases and shopping cart activity.

The events provide a chronological history of each shopping session and are used by the ShopLive application for data mining purposes, statistical reports, referral fees, or rebuilding the session or shopper's shopping cart in the event the shopper was accidentally disconnected during an active session.

Data domains for the ShopLive system are segregated into distinct areas or collections of data (referred to as Data Domains or Data Collections). The Data Domains perform the following functions: identify the primary data collections for the ShopLive application, identify and describe the data base tables within each data domain, describe the primary data elements within each table and provide a brief description of the data element and it's contents, and identify any business rules or regulations associated with the data elements.

In many instances the database tables are contained within third party Application Service Provider components such as loyalty or banner management applications. The ShopLive design interfaces and the data collection are referenced, rather than individual elements. For instance, loyalty programs exchange a shopper ID number as well as shopper profile information during registration and validation processes. When the loyalty program is selected the data elements, comprising the profile data, is passed to the loyalty application.

Shopper Data Domain contains data about each individual ShopLive shopper ranging from shopper registration through brand preferences to shipping preferences. Typically this information is collected through shopper registration, surveys and on-going execution of shopping sessions. The types of data compiled is listed below:
1. The shopper profile contains name address and pertinent personal data.
2. The shopper master file contains a master list of all registered ShopLive shoppers for login and validation purposes.
3. The address contains home, mailing and shipping information.
4. The family/group file contains data about family and group members.
5. The personal calendar contains shopper specific important dates.
6. The gift registry contains data about wish lists for self and family members.
7. The personal folder comprises two distinct sections, products and merchant sites. The personal folder holds product specific information, which the shopper has saved to their own personal folder either directly from a merchant catalog or from their shopping cart. The second section holds a list of merchant websites or links that the shopper wishes to remember. This area is a ShopLive specific "My Favorites".
8. Preferences file contain a shopper's brand and purchase preferences. The merchants and SLAs use this data during shopping sessions, as well as during creation of shopping missions. Merchants also use this data for targeting advertising, during shopping sessions.
9. The financial folder contains encrypted credit card and personal financial information for the shopper.
10. The interest's file contains shopper interests and habits data.
11. The shopping history file contains shopping history data based on shopper's previous shopping sessions including purchases.
12. The shopper's PNQ contains system notifications, reminders and messages for use when a shopping session is activated. This is persistent notification data, which is used to compile a transient session PNQ for each shopper.
13. The purchase history file contains pending purchase orders for purchases completed by each shopper as well as actual purchases that the shopper has completed in previous sessions.

The mall data domain contains data about the various mall properties, content, maps and merchant directories. It contains all mall relevant data required by the ShopLive application, merchants and shoppers, including the mall directory with mall profile, location and corporate data, maps with mall layout and graphical maps with images used to create mall maps, store directory with lists of active merchants linked by category and mall locations and active merchant agents, video station registry with list of active video stations and associated physical locations, mall agent's base notification queue ANQ that contains system notifications, reminders and messages for use when mall customer relations management (CRM) session is activated. This is persistent notification data that is used to compile a session ANQ for each mall agent.

Merchant Data Domain contains data about the various ShopLive merchants, catalogs, video stations, location, retail content and merchant profile information. It contains all merchant relevant data required by the ShopLive application, merchants and shoppers. The data sets include profiles that contains data about retail merchant and their location(s), catalogs which contains merchant catalog items, video catalog which contains videos associated with catalogs or website that may contain links to supplier provided videos or infomercials, store specific inventory information, data about sales initiated from ShopLive, information about pending and completed purchase orders, corporate and website profile for each merchant along with merchant WebPages hosted by ShopLive or on retailer web site, merchant base notification queue (MNQ) that contains system notifications, reminders and messages for use during merchant login (this is persistent notification data that is used to compile a session MNQ for each merchant video station), shopper purchase data for use when compiling shopper order and address and shipping information including preferred shipper.

The shopping system data domain contains all the temporary data related system data maintained by ShopLive during active shopping sessions. It contains detailed logs of shopping sessions used by the system to compile consumer and merchant marketing statistics. Shopping session logs are used by the application to update shopper profiles, shopping activity and trends. This data is used primarily for data mining activities prior to being removed from the ShopLive data archives. This temporary data consists of shopping session history, agent activity and logs of session events, shopping mission data that can be saved for later use, and active shopping cart and previous shopping cart for each shopper that is saved in the event of disconnection to allow the shopper reconnection to his last active session and recover his shopping cart, and any associated referral information to identify and track member merchants who referred shoppers to other merchants, and calculate member referral fees.

The systems data domain contains all system control information required by the ShopLive application for execution purposes. These tables are primarily static information used by the application for system and control purposes. Typical examples include tables of state names, cities, business rules, state tax tables, application business rules and other application data required by the ShopLive application during regular processing. The systems data domain includes;
1. Video Stations containing the list of registered video stations and the links to the associated merchants and malls including IP address information.
2. ANQ having a SLA agent's base notification queue that contains system notifications, reminders and messages for use when ShopLive agent CRM session is activated. This is persistent notification data that is used to compile a session ANQ for each SLA agent.
3. Agents containing a list of registered shopper service agents for ShopLive, malls and merchant video stations.
4. Product category containing lists of product categories, which are used for merchant classification during searches.
5. SLA Agents contains active list of shopper service agents and security information for use by the CRM component. It contains all relevant information about the SLA.
6. Notification queues contain SLA agent, merchant, mall agent, member, expert, service, and shopper notifications for use by the ShopLive application. ShopLive also reserves a common system notification queue used to handle all, internal messages.
7. Activity history contains statistical information on shopper visits and activity by video station, merchant and shopping malls. It is used during the production of traffic and activity reports for ShopLive, mall administrators and individual merchants.
8. Help files contains ShopLive system help data including FAQ, which are used to provide online help to shoppers, merchants, SLAs and ShopLive merchants using the ShopLive application.
9. Group statistics contains monthly, consumer group, merchant, mall and other statistical information for traffic and group demographic reports. This data is compiled on a group level for marketing and trend analysis.
10. XML validation rules contain decode rules for XML inbound and outbound messages. The system components use these rules for interpreting or creating XML documents for inter-system communication.
11. Error logs contain any system errors along with their severity and appropriate escalation business rules.
12. Shopper comments contain shopper complaints data, current status and complaint resolution information.

ShapLive creates a new shopping experience yet presents the experience in a format that is comfortable to the shopper because it mimics his prior shopping experiences. To achieve that result, the system has several components that constitute the ShopLive system. Operating on this or comparable systems is the ShopLive methodology as summarized below and which is explained in detail by reference to the drawings and detailed description of the preferred embodiment.

ShopLive Video provides the ability to provide real-time interactive video shopping experiences and provides interaction between a registered ShopLive shopper and a ShopLive merchant or ShopLive Assistant. Video enabled interactions occur between a shopper and a merchant but the application must also accommodate live voice chat and interactive text chat during the shopping experience. Using the Internet the shopper is able to interact with a live salesperson using the Internet and ShopLive video technology. This component also supports video conferencing to allow for group shopping or live video seminars. In the ShopLive videoconference scenario, the system provides the ability for a group of viewers to view the same video broadcast (live) from a ShapLive merchant or from the ShapLive Assistant. The shoppers effectively watch a live broadcast from the store video station.

Shopping Mission defines a shopping mission and sets measurable parameters, which expedite the shopping mission using pre-entered objectives or mission criteria. The shopping mission parameters are accessed interactively by a ShopLive merchant during a shopping session and used to enhance the shopping and selling experience.

Shopper profile provides the ability to register a shopper and define a shopper profile that can be used by ShopLive to streamline the shopping experience for registered shoppers. The shopper's profile stores preference, shopping history and other consumer behavioral data. ShapLive merchants are able to access the shopper profile information interactively during a shopping session to determine shopper preferences and allow them to serve the shopper better.

ShopLive assisted shopping provides the ability for a shopper to interact with a SLA to assist them with his shopping mission. The SLA is able to perform product and merchant searches on behalf of the shopper; answer questions, and connects shoppers to video merchants, assist with mission definition and other session functions as required. They act as personal shopping agents with the video shopper.

ShopLive shopping cart allows the shopper to save items to a common shopping cart from multiple merchants. The component allows the shopper to purchase items from multiple stores or locations rather than requiring visits to each store. The Shopping cart is tightly integrated with the purchase gateway.

Purchase Gateway provides the ability for shoppers to select and purchase items from various merchants using a common ShopLive shopping cart The ShopLive cart allows shoppers to buy products previously selected during the mission from their ShopLive shopping cart. The purchase gateway manages the purchase transactions from merchant inventory queries through credit card processing. The gateway handles the sales transaction and notification to the merchants.

Transaction Gateway (shopping session) is created when a shopper sign's into the ShopLive transaction gateway via the Internet, through a kiosk or by interacting with a Creation's touch pad, wireless device or like portal. The ShopLive application creates a unique shopping session for that specific shopper. This session serves as the transaction gateway through which the shopper completes his shopping experience.

The following components support the implementation of the ShopLive application. These components manage the data or accommodate access to the information provided by these components.

Session gateway framework is a common gateway to exchange information between the ShopLive core application components and the merchants using the application. The session gateway supports the interaction between the components operating at the mall or merchant level and the ShapLive transaction gateway shopper session running on the ShopLive servers.

A search engine provides the ability for a shopper or SLA to search for malls, stores or products through a ShopLive search engine. The search engine accesses both ShopLive internal and external databases for this information.

Catalog access provides access to catalog information on both retail and a chain level for the shopper. The application access catalog data directly for the shopper or provides a common interface to the catalog information stored in external databases. This supports catalog content as text, images or video images as needed.

Inventory access provides the ability to query catalog inventory availability at a store location level. Inventory that is managed by the ShopLive application is accessible immediately while external inventory system data is provided through a common interface. A common method of exchanging inventory data is documented and supported by participants in the ShopLive application using inventory API and XML forms.

Purchase fulfillment provides the ability to confirm purchases on behalf of a ShopLive shopper, complete the purchase cycle and handle order fulfillment including pick-up, shipping and handling based on shopper preferences. Purchase fulfillment is handled within ShopLive through an interface to an external purchase fulfillment application or through an interface with a merchant's application for that process.

Marketing reports and shopper profiling provides shopper profile information to registered merchants or merchants requiring profile information. Trend analysis reports by demographic groups are available for data-mining exercises by merchants and malls for market analysis reports. Merchants and malls are able to access and print reports using the ShopLive reporting functions.

Data mining of consumer purchase data (subject to consumer privacy regulations) is available for statistical purposes and other data mining exercises.

Loyalty program sponsored by the Mall, merchant or merchant or integrated into the ShopLive session or profile by reference to the ShopLive shoppers via registration code. The loyalty program application may be ShopLive implemented application or an external application.

Application Interfaces, interface with third party products and other external applications. ShopLive system users have access to an Internet email application that processes sending and receipt of emails. The ShopLive application generates and sends emails to various system users. Typical emails include order confirmation, marketing notices, merchant traffic reports, referral fee notices, and/or shopper purchase confirmation.

ShopLive supports auctions by various merchants. Video conferencing software allows video auctions to be scheduled and take pace within the ShopLive environment. The merchants handle the recording of purchases and fulfillment of orders. ShopLive acts as the portal and network to conduct the auction. In the Creations environment, shoppers will use portable devices that will hold identification, shopping cart, and other information pertinent to the shopping experience. These devices could be tokens, smart cards, biometrics readers, Portable Digital Assistants (PDA), and identification cards such as the AirCard^{™}. User information and application logic will be shared between these devices (clients) and servers in the ShopLive and Creations environments.

### BEST MODE FOR CARRYING OUT THE INVENTION

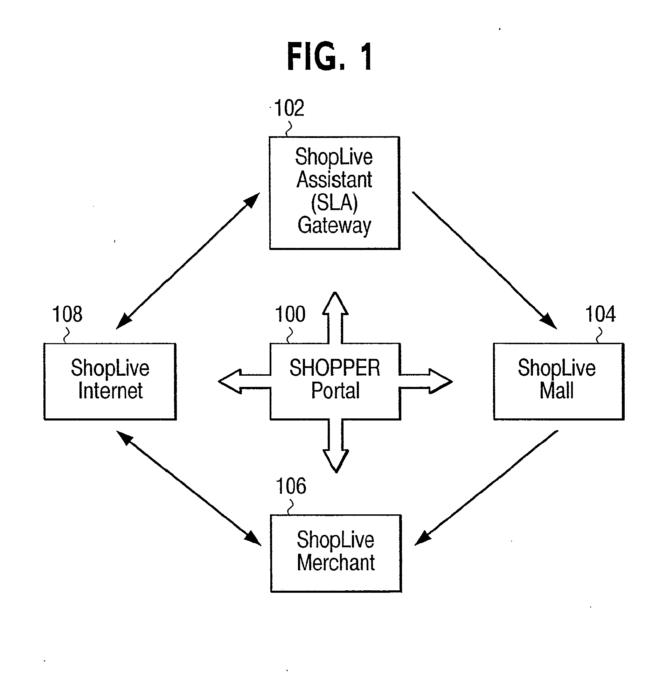

Referring to Figure 1, the diagram is a pictorial representation of the interactions between the various groups within the ShopLive application. A Shopper uses the ShopLive Browser 100, a downloadable plug-in to complete an Internet based video enabled shopping experience. Shopper access portal 100 also includes kiosks or computer touch pads within ShopLive malls and merchants' facilities and any network access device.

Using the ShopLive Browser 100 a shopper may access SLA gateway 102 that connects the shopper to a SLA who assists shopper with their shopping experience using the ShopLive video technology.

Using the ShopLive Browser as a portal 100 a Shopper can also access a ShopLive mall 104 partner that is a collection of video enabled merchants 106 in a physical location. Shoppers can either visit the mall merchants directly or use the Internet or like communication network to browse mall directory contents or interact with video merchants. The communications link may also be wireless.

Using the ShopLive Browser the shopper may also access a ShopLive merchant 106 directly or via other access points including a SLA gateway 102 and a ShopLive mall 104. The ShopLive Merchant site106 is a video enabled merchant who utilizes ShopLive video technology to interact with shoppers. Video merchants feature ShopLive video technology to allow consumers to view store items or interact directly with retail staff members via the in-store video stations. Consumers may also enter the store directly and purchase through a sales representative.

Supporting the communications link ShopLive components 102, 104 and 106 is the ShopLive Internet Application 108 that is a collection of software and hardware that supports the interaction of the ShopLive participants using the Internet and ShopLive video technology that is further discussed.

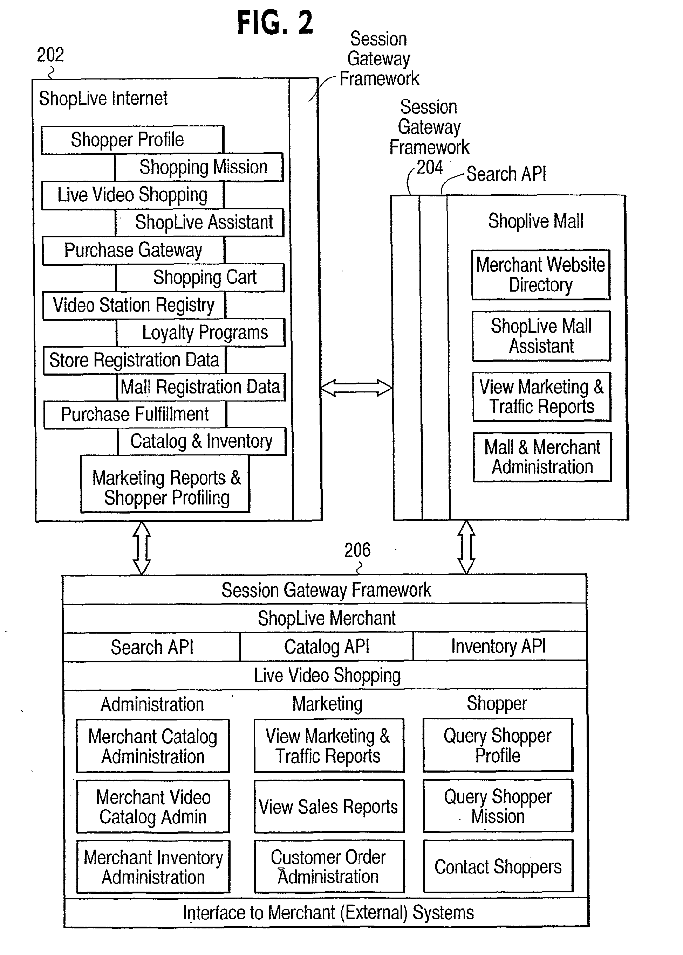

Figure 2, presents the way that the system is implemented in the preferred embodiment. This Implementation Model is a pictorial representation of the proposed implementation of the ShopLive application in the typical merchant application. The model describes the ShopLive application in terms of functionality, services availability and information collections and from the perspective of the services provided by ShopLive Internet 202, ShopLive Malls 204 and ShopLive Merchants 206 to the Internet shopper which are clustered together to provide application functionality. Differing implementation models may be appropriate for specialized applications of the technology, however the underlying approach to clustering components is the basis for each implementation. ShopLive Internet 202 functional group is the heart of the ShopLive application. All application transactions and information are controlled from this functional area. Shoppers, ShopLive Administrators and ShopLive CRM functions are provided services and information from this group of components. The individual components and their related information are depicted as functional areas in the diagram and relate back to the primary and secondary components as described below. The session gateway framework component manages communication and exchange of information with the other functional areas. The arrows within the diagrams depict information exchange.

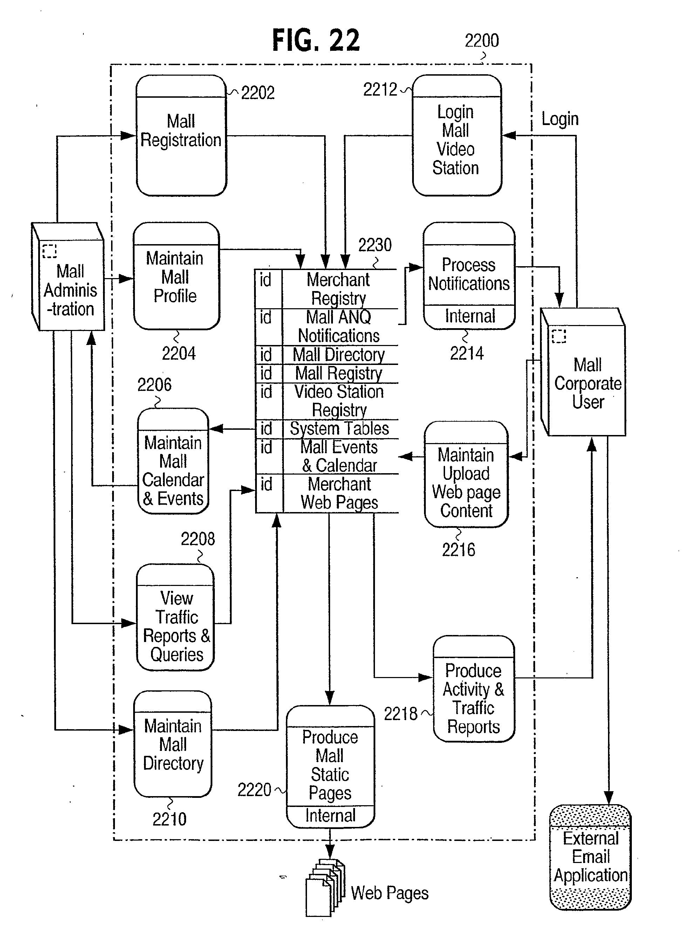

ShapLive Mall 204 functional area describes the services and functions provided by a typical ShopLive mall within the application. ShopLive malls interact with ShapLive merchants and shoppers via the session gateway framework component. Typical services or functions available to the malls are accessed to ShopLive search engines to access merchant directory information and to provide provisions and access to SLA functions by the mall assistants to access mall specific marketing and traffic information reports and to access mall and merchant administrative functions reference in the mall administration system, see Figure 22.

ShapLive Merchant 206 functional area describes the services and functions provided by a typical ShopLive Merchant via the ShopLive application. Merchants offer a greater set of functions and services due to their interactions with video shoppers. Merchants communicate with ShopLive Assistants, ShopLive Internet, ShopLive Malls and video shoppers via the session gateway framework. Typical services or functions available to merchants are access to ShopLive search engines, catalog management services, inventory management services, live video shopping functions, catalog administration services, video catalog administration services, inventory management services, traffic and marketing reports, sales reports, shopper order administration functions, and the ability to query shopper profile and habits during a live session, query shopper mission, and to contact shoppers (appointment management and calendar functions) and to provide access to external merchant systems (via XML or custom interfaces). The components to support these functions are described below.

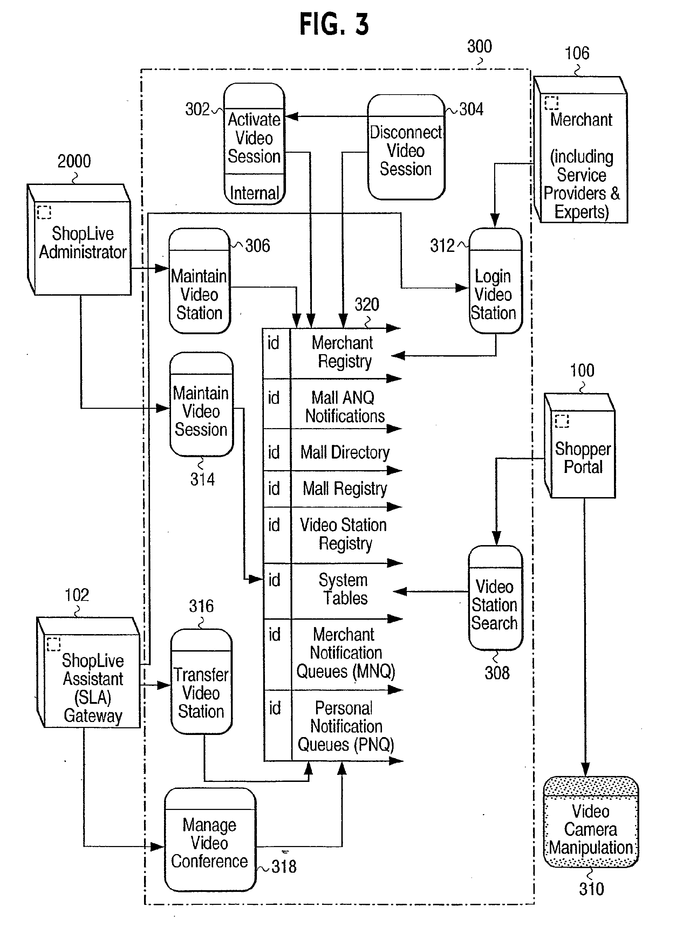

Referring to Figure 3, the ShopLive video component 300 comprises a downloadable Java plug-in referred to as the ShopLive Browser within this document that provides video functions as well as the supporting software components of functions to support the video session. Using the Internet, the shopper is able to interact with a live salesperson using the Internet and ShopLive video technology. This component also supports video conferencing to allow for group shopping or live video seminars.

This ShopLive Browser gives ShopLive the ability to provide real-time interactive video shopping experiences and provide interaction between a registered ShopLive shopper and a ShopLive merchant or SLA. The ShopLive Browser supports the live video sessions between the shopper, the SLAs and the video enabled merchants. Video enabled interactions occur between a shopper and a merchant, but the application also accommodates live voice chat and interactive text chat during the shopping experience.

Activate video session 302 is an internal process that initializes a video session and completes the setup of system files. Tasks managed by this function include verify location and version of ShopLive browser, validate system data, initiates download of ShopLive browser, establish session parameters and communicates with active shopper session through session events.

Disconnect video Session 304 manages the automatic closure of video sessions. The function monitors the connection and once ended, cleans up any temporary files, system memory and updates video station activity table. The function automatically pings video station IP address to monitor connection status. The interval is managed through system parameters.

Maintain video stations 306 allow the system administrator to register video stations, manage video station data IP addresses, location and type of equipment and associate video stations with storefronts and merchants.

Video station search 308 allows shoppers to search for active video stations and their associated merchants within the ShopLive merchant directories.

Video camera manipulation function 310 provides the ability for a shopper to manipulate a video station camera via the Internet. Through this API control the shopper is be able to pan, tilt and zoom capability using vertical or horizontal controls. Video stations have the capability to determine the product code or product SKU they are viewing using bar code readers and like product identifiers. In the alternative, product selection, during video shopping sessions, may be from either the shopper or merchant.

Login Video Station 312 allows the SLA or video merchant to login into their individual video station and activate connections with the ShopLive application. Video stations have two states, inactive when the video station has been disconnected and active status, which is triggered by agent login at the video station. Once connected to the network the video station broadcasts web camera images.

Maintain video sessions 314 allow the ShopLive system administrator to monitor active video sessions for control purposes. This feature is used for policing of transmissions or as training aids for new SLA agents. This feature is also extended to merchants to assist them when training new staff in shopper services.

Transfer Video Session 316 is used by the SLA to transfer a shopper to a video merchant session. Transfers are automated through system notifications.

Manage video conference 318 provides support for the scheduling and delivery of video broadcasts and infomercials including support for video-conferencing sessions. During a ShopLive videoconference, the application provides the ability for a group of viewers to be able to view the same video broadcast live from a ShopLive merchant or from the ShopLive Assistant. The shoppers are effectively watching a live broadcast from the store video station. The function allows the merchant to schedule videoconferences, manage conference registration, manage the videoconference notifications, alert registrants via system notifications and manage session broadcasts.

The SLA agent can use the videoconference capability to deliver training sessions for new shoppers or address Shopper Relation issues.

ShopLive video rules to operate the above-described system of Figure 3 are encoded in software to perform the following functions:
All video station cameras are by default in videoconference mode providing for viewing by multiple shoppers, the shopper determines whether their video session with a merchant is private or public, occupied cameras show as busy during a private video session, scheduling of video sessions is handled through the system notification process and the waiting shoppers informed automatically of wait times, the initial shopper has the ability to manipulate the video camera. Other participants are able to watch but not interfere with camera operation and the merchant has the ability to control camera[s] during a session. The merchant can lock camera controls from the video station workstation.

Each ShopLive component accesses many tables within the ShopLive application. The diagrams displays only some of the tables or table groupings accessed by the application component functions and describe the nature of information collected or accessed. Detailed explanations are only provided to clarify the function processing depicted by the diagrams. The registry tables within 320 for Malls, Merchants and Video Stations are used by the application to track active participants with ShopLive. The search engines use these tables to locate malls, merchants and active video stations for shoppers, merchants and SLAs during a typical shopping session. As new merchants or video stations are added or updated within ShopLive by the ShopLive administrator, these tables are updated in real-time for use by application components.

The notification queue tables Mall ANQ notifications, Merchant Notification Queues (MNQ) and Personal Notification Queues (PNQ) within 320 are used extensively during ShopLive video processing for controlling sessions parameters and seamless transfer of video sessions between participants.

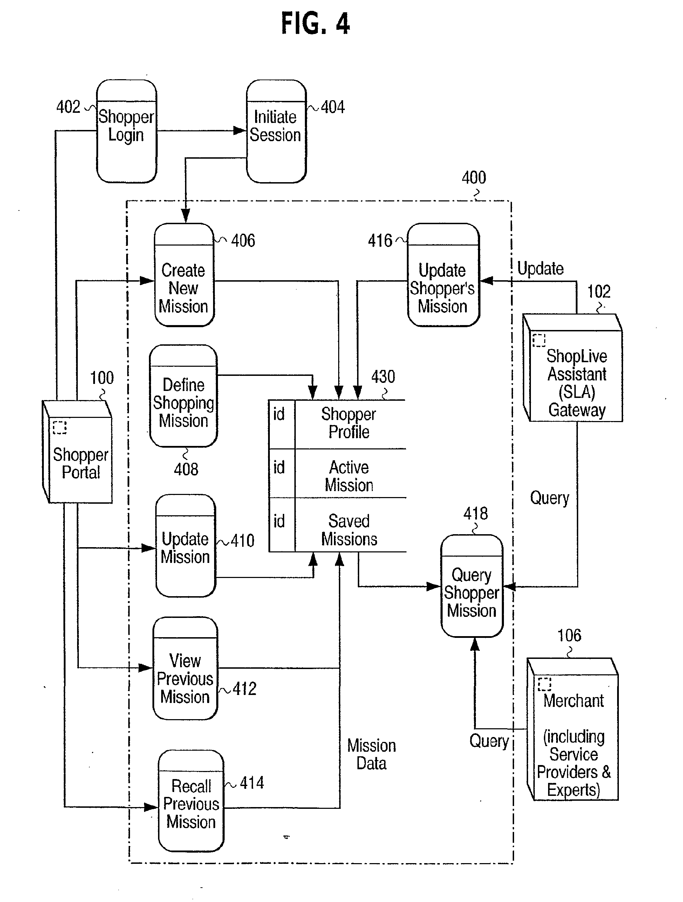

Referring to Figure 4, the Shopping Mission 400 provides the ability for a shopper or SLA to pre-define a shopping mission and set measurable parameters that expedite the shopping mission using the pre-entered objectives or mission criteria determined by the shopper during registration and saved in their shopper profile. The shopper profile can be updated based upon active shopping missions, which can be compared and stored by the shopper as saved missions for future use. This interactive process of defining shopper profile, creating active shopper missions and saved missions, provides both the shopper and retailer with behavioral data on shopper's shopping and purchasing behavior.

The Shopping Mission function accesses multiple application tables but primarily concentrates on the shopper profile and shopping mission data for processing. The shopper profile 430 in this context is the collection of tables that ShopLive maintains to describe each individual shopper. The shopper profile data is read and updated by the various functions and used to create a new mission, determine shopper preferences, access shopper history and shopper profile data used to create a new mission or enhance an existing mission. The active mission is created each time a shopper initiates a new ShopLive session and built using existing shopper profile and mission data. Once a mission is completed it is saved for future use by the shopper or the system for profiling purposes.

The shopping mission parameters can be accessed interactively by a ShopLive merchant (during a shopping session) or the ShopLive SLA and used to enhance the shopping and selling experience.

The shopping session is created automatically when the shopper signs into a ShopLive session. In the event that a shopper decides to create their own shopping mission or use a previously defined shopping mission, the system created shopping missions is over-written. The ShopLive system makes extensive use of the shopping mission during searches and merchant interactions to simplify and expedite the shopping experience for the shopper.

The shopping mission diagram 400 is a pictorial overview of the application functions used to manage the Shopping Mission information. These functions are described below.

Shopper login 402 manages the sign-in process of a registered ShopLive shopper. Unregistered shoppers are able to shop as an anonymous shopper or provided the opportunity to register. This function validates the shopper entered ID, name or email address against the registered shopper database. The registration is also used to determine if the registered version of the ShopLive video browser plug-in is a current version. Initiate session 404 manages the creation of a ShopLive shopping session, loading of shopper preferences, creation of system files such as shopping cart, loading personal notification queue (PNQ) and establishing contact with the ShopLive master databases. These processes occur in the background as the ShopLive session is displayed on the shopper's terminal along with current notifications.

Create new mission 406 function automatically creates a new or active shopping mission for the shopper when they start a shopping session. It updates the active shopping mission with key shopper data including brand and store preferences.

Define shopping mission 408 allows the shopper to define his own shopping mission based on his own criteria. The criteria are pre-filled with shopper's brand and store preferences where possible to reduce data entry time. The shopper is able to use previously entered gift registry and special occasion information from their profile to complete the fields required.

Update mission 410 allows the shopper to update the active shopping mission with additional criteria or parameters. The shopping mission can be updated at any time during a shopping session through the use of the shopper's ShopLive menu.

View previous mission 412 displays a list of active shopping missions defined for that shopper along with a brief description of the mission. The shopper may view any of the shopping missions that they have saved to their ShopLive portfolio.

Recall previous mission 414 allows the shopper to select a previously saved mission and resume shopping using that mission.

Update shopper's mission 416 allows the SLA to view and update a shopper's mission during a video session for a shopper. The function is available to SLAs once they have been requested to provide assistance to shopper and a video session has been established.

Query Shopper's Mission 418 provides the ability for the merchant to query the shopper's profile automatically when a shopper visits the merchant and then displays the shopper's mission on the retailer's screen. The query process is automatically triggered when a merchant accepts an incoming call from a video shopper.

The shopper mission business rules to operate the above-described system of Figure 4 are encoded in software to perform the following functions.

The Search API accesses the Shopper's Mission to assist with the search. When a shopper selects the search catalog function the search API accesses the active shopper's mission and pre-fills the search form with the data from the mission.

The shopping mission travels with the shopper as they move from store to store and allow the merchant to determine their shopping objective without the shopper having to explain. The merchant is able to view the shopper's mission and identify the shopper as they enter the store through ShopLive. The merchant is able to personalize the shopping experience and provide a better level of service.

A shopping mission is created for each shopper within ShopLive. For walk-in shoppers the mission is used primarily for trend analysis during post-session evaluation. The mission may be viewed by Creation's shopping assistants during a shopping session or at the termination of a session to determine which store fronts the shopper visited.

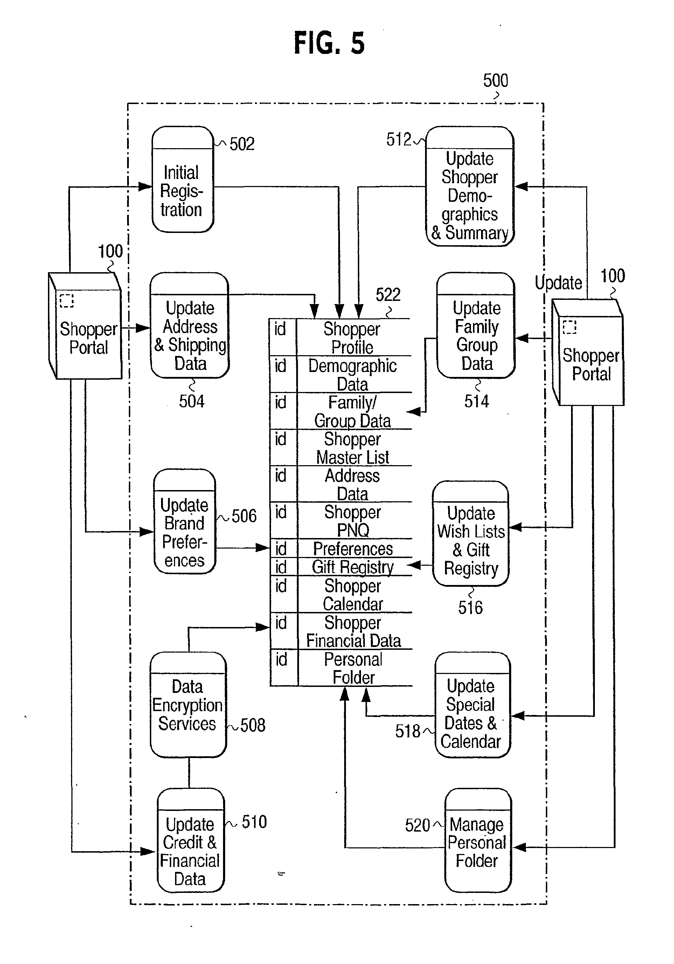

Referring to Figure 5, ShopLive provides the ability to register a shopper and define a shopper profile that can then be used by ShopLive to streamline the shopping experience for registered shoppers. The shopper's profile 522 serves as a central secure repository of shopper information including store preferences, shopping history and other consumer behavioral data. ShopLive merchants are able to access specific parts of the shopper profile information interactively during a shopping session to determine shopper preferences and allow them to serve the shopper better.

The data for each shopper is gathered during initial registration processing and saved in the shoppers profile, through on-going shopper interactions within the ShopLive application. Additional behavioral information is gathered during shopping sessions and added to the shopper's profile. Data is segregated into functional areas for collection purposes. The shopper profile 522 in this context is the collection of tables that ShopLive maintains to describe each individual shopper. The shopper profile data is read and updated by the various functions and used to create a new mission, determine shopper preferences, access shopper history and shopper profile data used to create a new mission or enhance an existing mission. ShopLive accesses external consumer data to augment the shopper profile data. Types of data collected and integrated into ShopLive include shopper credit, consumer demographic behavior, purchase data and other relevant shopper data. The sub-system to manage the shopper profile 500 consists of the following functional components, which are described below.

The initial registration 502 records initial shopper demographic information and assigns each shopper a unique identification number as well as providing access via their email address. Relevant data is captured during shopper registration. The function allows shoppers to change password and information as required during subsequent sessions.

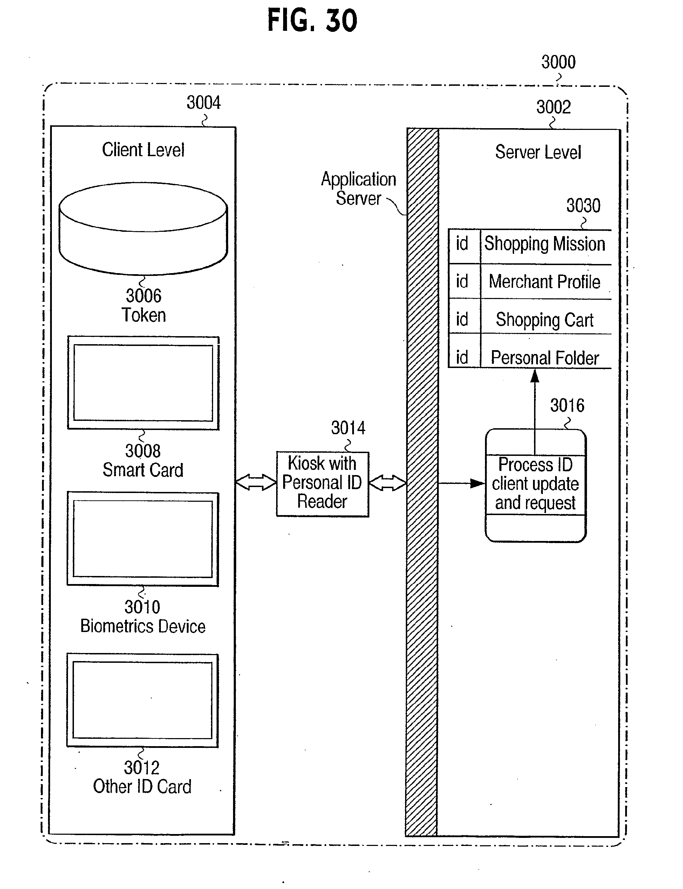

As Shown subsequently in Figure 30, shoppers are assigned a token, card or unique tag 3004, which identifies then as a ShapLive shopper during their shopping session. The token 3004 is used by the ShopLive application to identify the shopper at kiosks or tablets during their shopping session.

Update and shipping data function 504 is used by the application to record and update shopper address and shipping preference information. The shopper may update information at any time during the current or subsequent sessions. The address information is used during purchase and shipping processes to reduce the amount of information that the shopper needs to enter to complete their transactions.

The update brand preferences function 506 allows the shopper to register and update their brand and store preferences by product categories. Shopping missions and search engines, to streamline the search processes by returning a shopper's preferred brands or merchants in the search results, utilize the brand preference information:
The manage credit card and financial information function 508 allows shoppers to record credit card and other financial information for use during shopping sessions. The data is encrypted and stored on a secure server to ensure security. The system tracks shopper purchases and provides financial reports for the shoppers detailing ShopLive purchases against specific credit cards.

The data encryption services 510 are responsible for the encryption and decryption of financial information being stored on the Shop Live secure financial server. All purchase transactions and any access to a shopper's financial data occur through this gateway.

The update shopper demographic and summary module 512 allows the shopper to add or change personal demographic information maintained within the ShopLive application. The module also maintains a summary of ShapLive activity including purchases and visit history within the ShopLive world. This data may be viewed or used for reporting purposes.

The update family group data 514 provides the ability for a shopper to maintain or be a member of various shopping groups. Through this function the shopper can manage their groups and group relationships. Typically a shopper uses this module to identify their family members and core information about them such as names, birth dates and relationship. Additional data can be defined for these members within the gift registry module.

The update wish list and gift registry module 516 allows shoppers to maintain wish lists or various gift registries. The following functions are available within this sub-system; maintain wish list for self or family group member, add, update or delete items from the wish lists, send wish lists to other ShopLive members within your family group, create and maintain gift registries for weddings or special holidays, add, update or delete items from owned gift registry 522 and share gift registry list with other ShopLive members via email.

The update special dates and calendar function 518 allows the shopper to record special dates within a personal calendar along with reminders for special occasions. The shopper can record dates, set reminders and have themselves automatically notified through the Personal Notification system of these dates.

The manage personal folder function 520 allows the shopper to view and maintain their personal folder information at any time they are logged into ShopLive. The personal folder provides a convenient notebook where the shopper can maintain a list of products and merchants of interest to themselves (bookmarks). The shopper may review, update or remove items from their personal folder at any time during a shopping session. The folder also allows shoppers to maintain notes for each item in their personal folder.

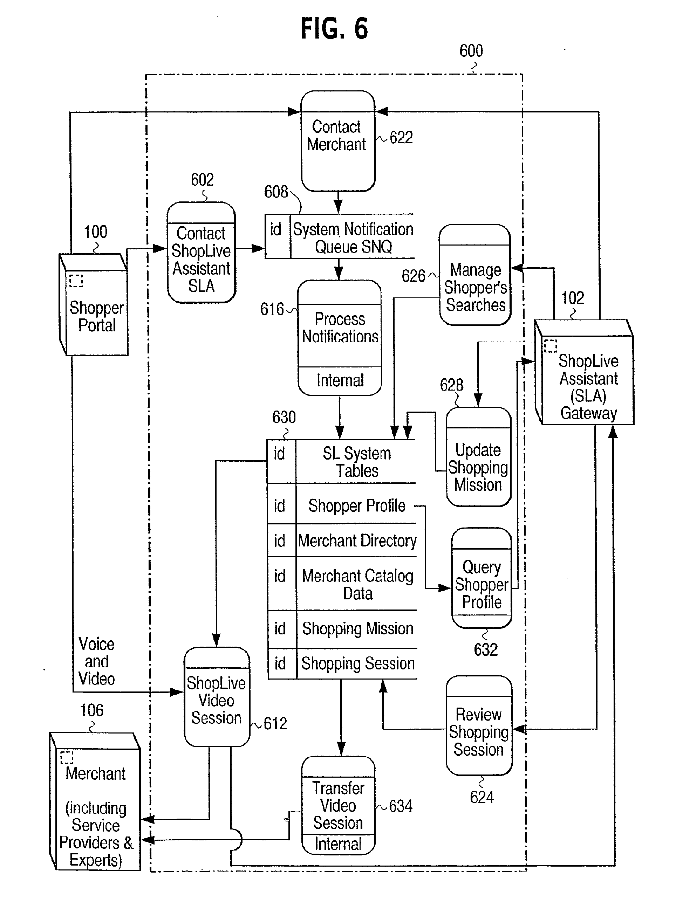

Referring to Figure 6, the ShopLive assisted shopping application 600 provides the ability for a Shopper to interact with a SLA to assist them with their shopping mission. The SLA is able to perform product and merchant searches on behalf of the shopper; answer questions, and connects shoppers with video merchants, assist with mission definition and other session functions as required. They act as personal shopping agents with the video shopper.

The contact ShopLive agent function 602 allows the shopper or merchant to contact the SLA for personal assistance. The function automatically creates a system notification request SNQ, which is routed to the next available SLA.

Process notifications 616 and SNQ 608 functions manages the matching and distribution of notification messages to the ShopLive users from the other system users. Notifications are automatically routed through a series of notification queues to the recipients. Some notifications result in messages whereas other automatically triggers actions by the active shopper session.

The ShopLive Assistant can access the shopper profile, merchant directory and merchant catalog on behalf of the shopper to assist them with their shopping mission. In this context table 630 is the collection of tables that the SLA accesses to support each individual shopper. The Shopper Profile data is read by the various functions is the shopping mission to determine shopper preferences, access shopper history and shopper profile data used to create or update the new mission or enhance an existing mission.

The ShopLive session 612 manages the transmission of voice and video between the shopper and either the merchant or the SLA.

The manage shopper searches function 626 provides search capability to the SLA who can perform searches on behalf of the shopper. The search results can be pushed to the shopper session for display and navigation purposes. The SLA can also push merchant URL or product results to the Shopper's active session.

The update shopper mission 628 provides the capability for the SLA to manage the shopper's mission on their behalf. A shopping mission is automatically created for a shopper and travels with them during their shopping session. The mission is utilized by the ShopLive application to streamline the shopping session and streamline product searches and provide information on the shopper's objectives to the merchants or SLA.

The query shopper profile function 632 allows the SLA to query the shopper's profile to better assist them. The SLA can use key shopper preferences and profile data to build the shopper's mission.

The review shopping session function 624 allows the SLA to review the shopper's shopping session event log and determine what activities the shopper has participated in during the current session. With this information the SLA can better assist the shopper.

The contact merchant function 622 allows the SLA to contact a merchant on behalf of a shopper, determine answers to shopper questions and arrange for appointments on behalf of the shopper.

The transfer video session 634 allows the SLA to transfer a shopper video session to a video merchant. The transfer is initiated through the SNQ and built in video browser plug-in messaging functionality.

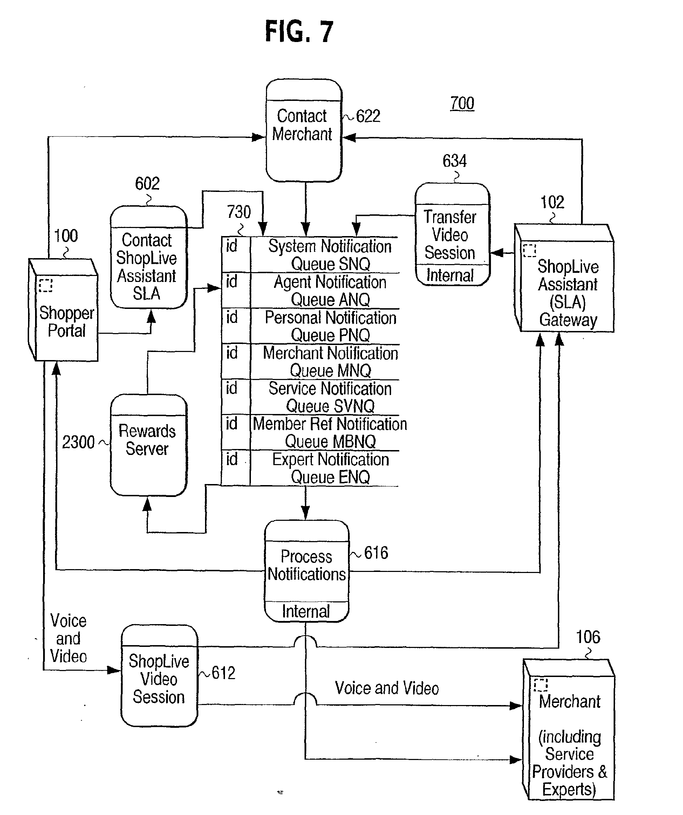

Referring to Figure 7, the process notifications function 700 collects SNQ, ANG, PNQ, ENQ, SVNQ, MBNQ, and MNQ data in file 730 from multiple inputs including the contact SLA function 602; contact merchant function 622 and the transfer video session function 634. This internal ShopLive function 700 manages the matching and distribution of notification messages to the ShopLive users from the other system users or system processes. Each notification messages contains embedded sender and recipient information as well as notification detail. An internal process 616, processes the message and forwards it to the correct recipient based on the embedded address data. Multiple instances of the notification processing software execute simultaneously. The recipients include the shopper portal 100, SLA gateway 102 and the merchant gateway 106. The shopper portal 100 initiates a ShopLive video session 612 and connects the SLA gateway 102 and merchant gateway 106 to place the shopper and merchant in communication.

Notifications are automatically routed through a series of notification queues to the intended recipients. Some notifications result in user messages whereas others automatically trigger actions by the active shopper session.

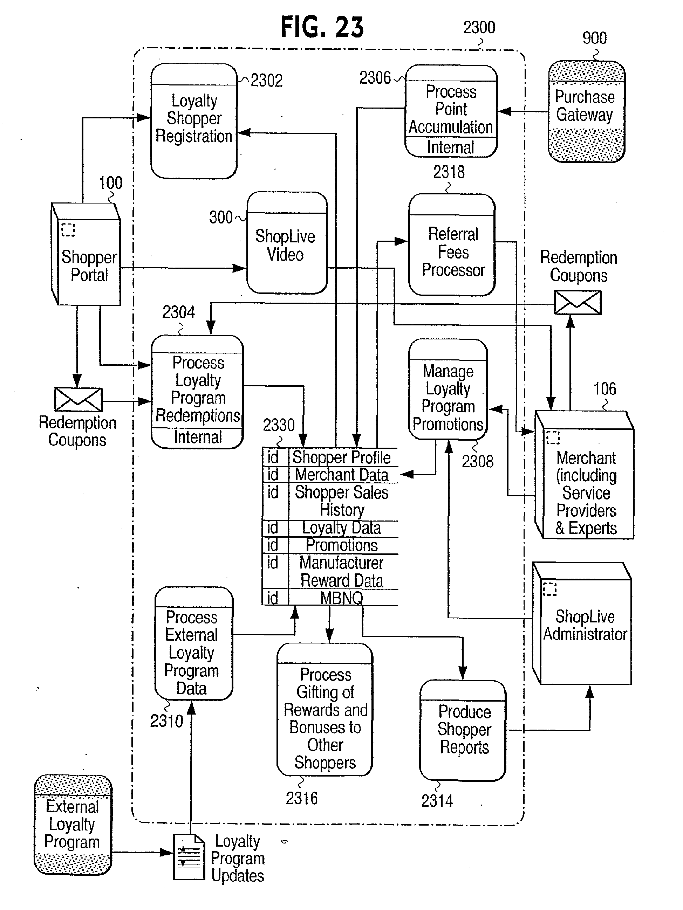

As shown subsequently in Figure 23, MBNQ are sent to the Rewards Server 2300 where referral fees for referring shoppers are calculated and dispersed. Notifications are sent from Rewards server to the merchants involved.

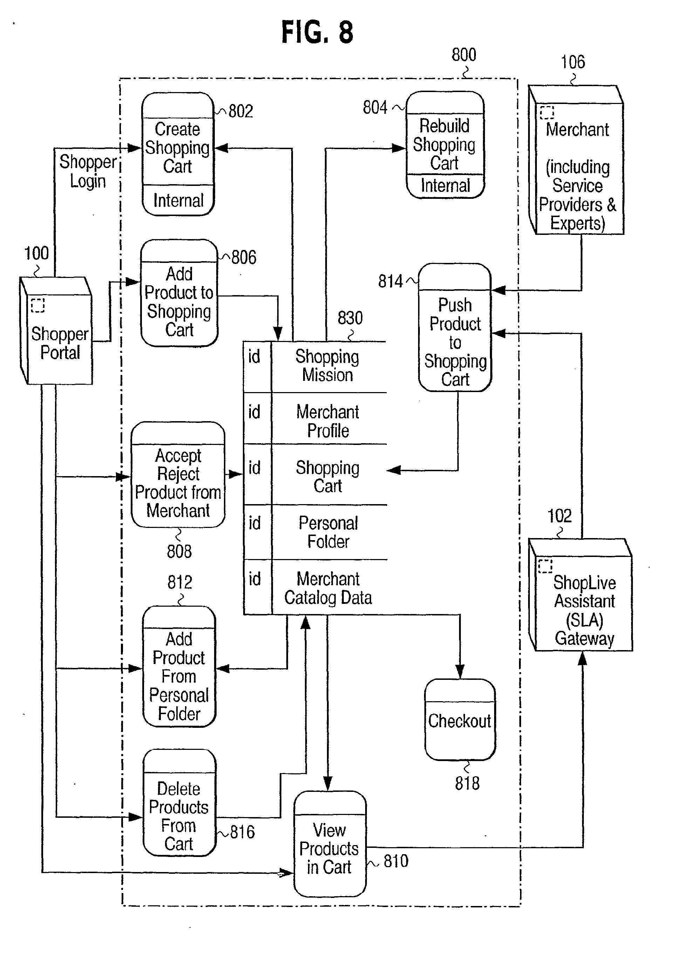

Referring to Figure 8, ShopLive shopping cart 800 supports the concept of a global shopping cart for their shopper's convenience. It allows the shopper to purchase items from multiple merchants or locations rather than requiring individual purchases at each merchant location when leaving the merchant site. The Shopping cart is tightly integrated with the purchase gateway. Shoppers have the added convenience of being able to initiate the purchase at any time during their shopping session.

The ShopLive shopping cart is a collection of items (products, services, and/or intellectual assets) that the shopper is interested in purchasing. In this context 830 represents the data that the shopper has chosen to add to the shopping cart selected from merchant catalog or shopper's own personal folder. Each shopping cart activity is recorded in the active shopping mission. Through this function shoppers can also save items including merchant profile to their personal folder.

The ShopLive application maintains a copy of the active shopping cart for each shopper during each shopping session. In the event that a shopper is disconnected from the ShopLive application due to a power outage or other event, their current shopping cart is saved for recovery purposes. The shopper is queried upon a subsequent login if they wish to resume shopping with their previous instance of their shopping cart.

The created shopping cart function 802 automatically creates an instance of a shopping cart for the shopper. The function is triggered when the session is activated as the result of a shopper logging into the ShopLive application as a registered shopper or as an anonymous shopper.

The rebuild shopping cart function 804 manages the rebuilding of the shopper's shopping cart from the last session. In order to manage the rebuilding of the shopping cart/shopping session ShopLive accesses a field in the shopper profile holding the last session id as well as a session status flag. When a shopper logs in to the process it retrieves these values, queries the shopper if they wish to resume their last session (if not completed correctly) or wishes to resume shopping with their last instance of their shopping cart. Based on their response the function can use the session id to get correct session log and rebuild the last instance of the shopping cart.

The add products to shopping cart function 806 allows the shopper to add products to their shopping cart. The process adds the highlighted product from the shopping session catalog or search results and adds this information to the active shopping cart.

The accept/reject product from merchant function 808 allows the shopper to add or decline a product that a merchant has pushed to them during the video shopping session. The shopper controls this process to avoid potential abuse by the merchant.

The view products in cart function 810 allow the shopper to view the products they have saved to his shopping cart during the shopping session.

The add products from personal folder function 812 allows the shopper to move products they have previously saved to their personal folder to their shopping cart. Additionally they may also save products from their shopping carts to their personal folder for later use.

The push products to shopper function 814 is used by the merchant to push items to the shopper during a video session. The product details are displayed on the shopper's terminal and they can choose to add the product to their cart if desired.

The delete products from cart function 816 allows the shopper to delete or drop products form their shopping cart. The shopper checks the product(s) they wish to delete and then they are removed from the shopping cart.

In the Creations implementation, the shopping cart business rule provides that each shopper has access to personal shopping carts during their shopping session. Creations shoppers access their shopping carts via the Creations kiosks or tablets located throughout the retail premises via their token 3000 (See Figure 30). Full access is available for any of the functions to control the content of their shopping carts. Walk-in shoppers to a fixed site are restricted to those merchants and product selection available within the specific property.

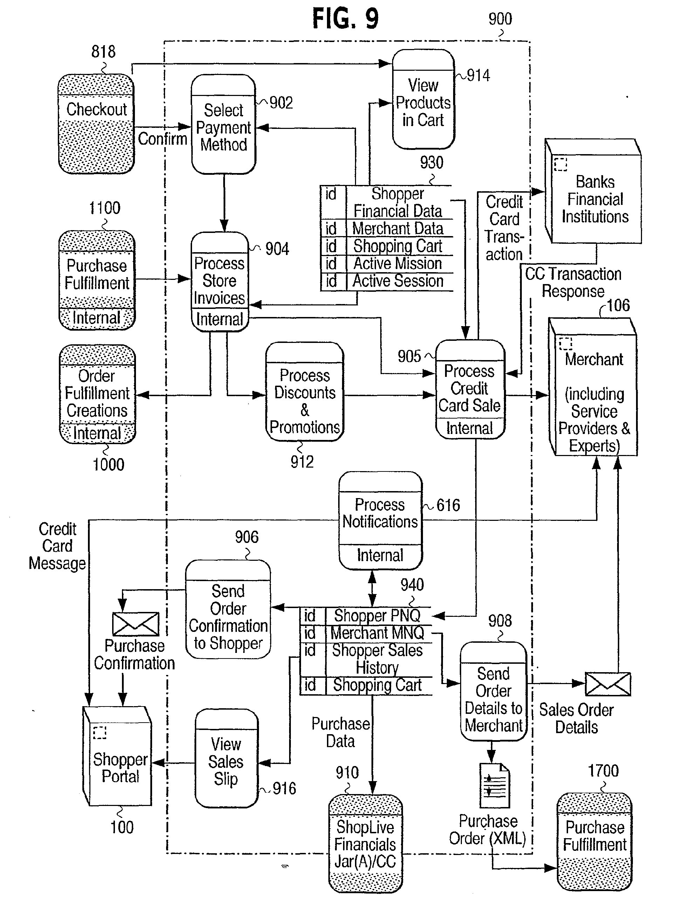

Referring to Figure 9, the Purchase Gateway 900 is the sub-system that manages the purchase transactions initiated by the shopper for the products they have selected from their shopping cart. The purchase gateway manages the purchase transactions from merchant inventory queries through credit card processing and other forms of electronic payment. The gateway also handles the sales transaction and purchase notification to the merchants once the sale has been completed.

There are alternative methods to process purchase transactions on behalf of the shopper. In business model # I, ShopLive purchases items on behalf of the shopper from the merchants (shopper pays ShopLive who acts as a consolidator for the shopper). In business model #2 the shopper purchases directly from the merchant through ShopLive. In the latter case ShopLive consolidates the order for each merchant and facilitates the purchase.

The purchase gateway accesses all of the information required to complete the purchase by the shopper for the items (products, services, and/or intellectual assets) that the shopper has selected from the various merchants visited during the active shopping session. In this context file 930 represents the data required to complete the purchase.

The process store invoice 904 function compiles products into merchant grouping for credit card processing purposes. The function sub-totals line items by merchant and store, processes applicable merchant and ShopLive discounts, validates inventory and product availability, gets delivery method information from shopper, calculates delivery costs and displays invoice totals to shopper for purchase confirmation.

The select payment method function 902 confirms payment method for purchase with shopper. The function gets financial data from Shopper profile, determines which payment method the shopper wishes to use, confirms which payment types the merchant(s) accepts and prepares any credit card order(s) for processing. This function also handles the application of any gift certificates as a payment method for product purchase.

The process credit card sale function 905 handles the transmission of credit card purchases to an external credit card processing facility. Upon confirmation or declination of the transaction, the function manages the notification of the sale as well as updating the shopper purchase history.

Once the purchase is completed all of the shopper and merchants files are updated with the purchase transaction details 940. This purchase information is assessable by the external ShopLive financials (AR, AP and GL).

The send order confirmation to shopper function 906 formats order confirmation data into a standard email format and sends the order and purchase confirmation to the shopper's email. The function also displays the order and purchase details to the shopper screen 916.

The send order details to merchant functions 908 handles the format and transmission of the, purchase order confirmation to the merchant, shipping order details from shopper profile if applicable, merchant order slip for warehouse staff and order preparation and XML delivery sheet to external delivery application.

The update ShopLive financial data function 910 manages the update of the system financial data. The function updates shopping cart to reflect purchases, updates shopping mission events to reflect purchase, creates the required interface records for ShopLive financials (AP, GL, AR) and update shopper's purchase history.

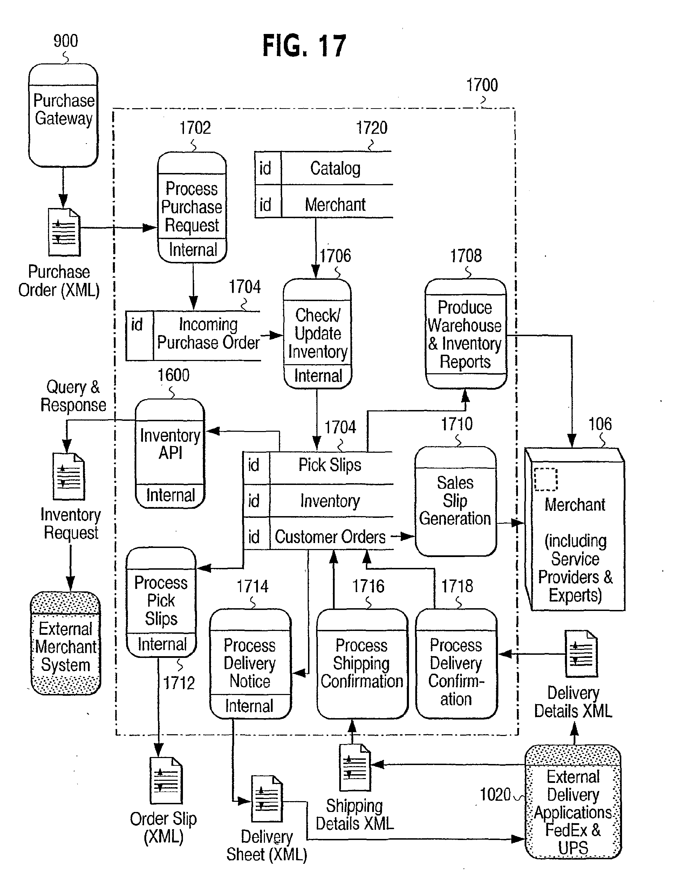

The business rules for the purchase gateway established the method for purchase fulfillment for the walk-in shopper in a physical location in much the same method as for a regular ShapLive shopper. The primary differences is walk-in shopper's is identified via their unique token 3004 (See Figure 30), a walk-in shopper may initiate purchases at any of the tablets or upon exiting the physical property and the shopping centers may have a warehouse fulfillment center to complete shopper's order. The purchase fulfillment function is further defined in Figure 17, process 1700 and the related textual specification.

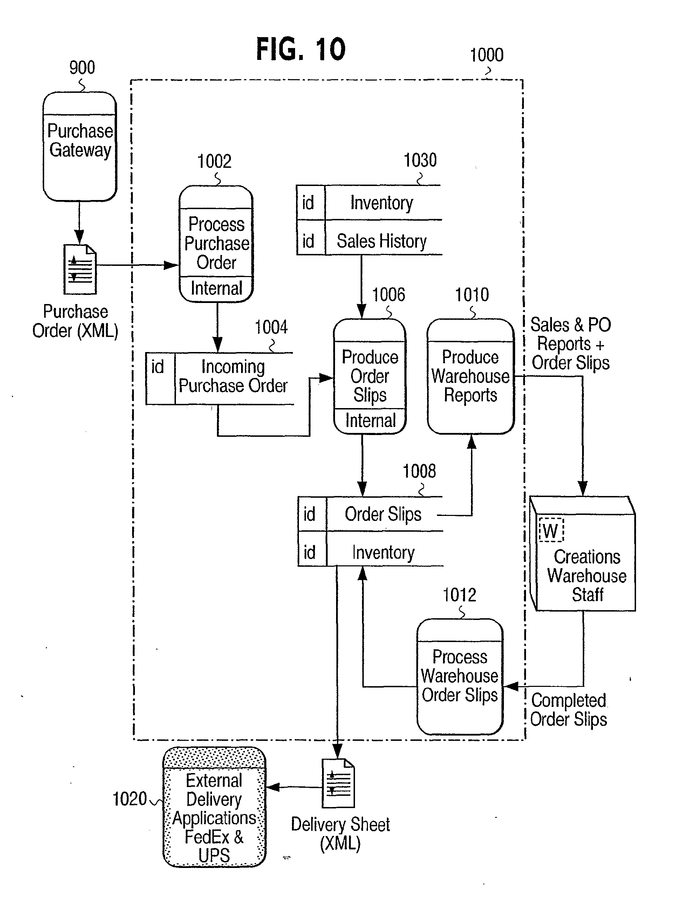

Referring to Figure 10, the order fulfillment process 1000 for a particular embodiment of the ShopLive system used in a physical walk-in embodiment known as "Creations" is diagrammed.

Order Fulfillment in Creations uses enhanced fulfillment capabilities unique to it. Additional functionality is provided to address the specific order fulfillment business processes required by the Creations warehouse and in-house staff. Creation's shoppers are unique in that they use the ShopLive application to complete their shopping mission, either via the Internet or live at a Creations location.

A shopper deciding to complete the purchase transaction whether at the Creations checkout or from one of the kiosk tablets located throughout the location triggers process purchase orders within Creations. Once completed the purchase function causes a Purchase Order to be generated by the purchase gateway Figure 9 process 900. The purchase order document is handled by the process purchase order 1002, this function decodes the XML document, updates the incoming purchase order 1004 table and prepares the order for additional processing.

Produce order slips function 1006 takes the incoming purchase order, validates the order against the sales history and merchant inventory 1030, generates a order slip 1008 that can be used by warehouse staff for order compilation and generate an XML Delivery sheet for those orders where the shopper has selected delivery as their method of order fulfillment.

Produce warehouse reports 1010 for the Creations warehouse staff uses this function to produce the various warehouse reports to be used for order processing, warehouse management and external delivery functions 1020.

Process warehouse order slips function 1012 allows the warehouse staff to complete the order slip processing after an order has been compiled and prepared for the shopper. Order details are entered and the original order marked as completed.

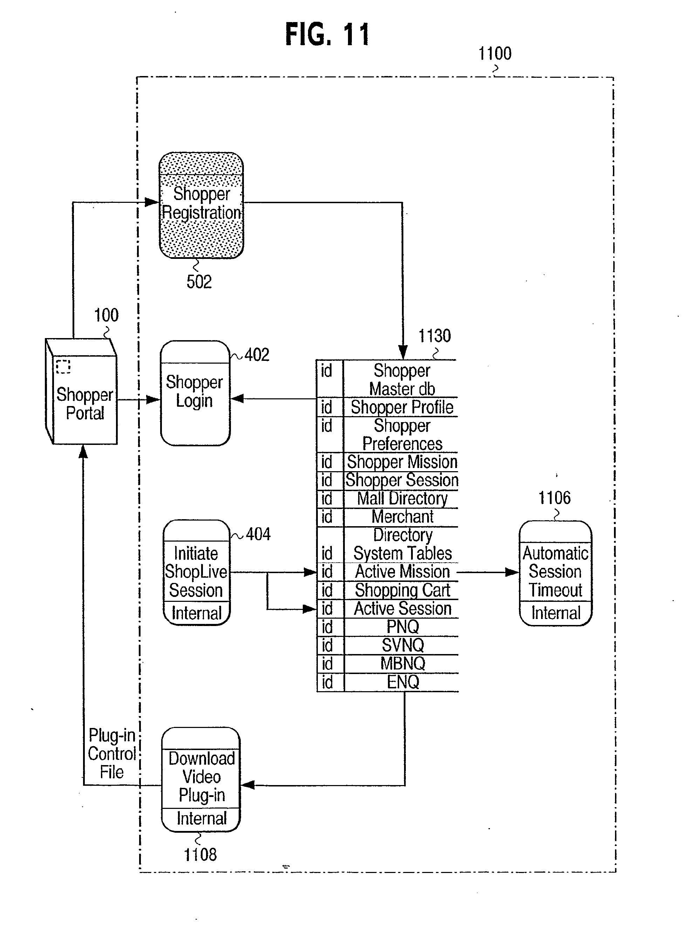

Referring to Figure 11 the ShopLive session is created when a shopper signs into the ShopLive transaction gateway 1100 using the ShopLive Browser via the Internet, through a kiosk or by interacting with a Creation's touch pad or like entry devices. The ShopLive application creates a unique shopping session for that specific shopper. This session serves as the transaction gateway through which the shopper completes their shopping experience.

The shopper login 402 manages the validation of shopper name and password to ensure that the shopper is registered with ShopLive 502. For a new shopper the function initiates shopper registration or sets up the user as an anonymous shopper if they choose not to register. Once completed the shopper login function 402 passes control to the initiate ShopLive Session module 404. Creation's shoppers are assigned a token or card 3000 (See Figure 30) used to facilitate their purchases at the various tablets or kiosks on the property.

The initiated the ShopLive session function 1130 creates all of the temporary tables required by the ShopLive session modules including creation of the various temporary tables required by the system. The function performs the following tasks of creating active shopping mission, active shopping cart and reading shopper data to determine status of last session, initiate rebuild of last shopping mission and shopping cart if required, loading shopper profile/preference data for shopping mission, initiate shopper notification queues and loading up application cache files such as merchant and store directories.

The automatic session timeout 1106 automatically times out after a certain period of shopper inactivity. The period is controlled by system parameters within the ShopLive system tables. Once a session has reached the timeout threshold, the session, shopping cart and mission data is written to system tables. When a shopper reconnects their session by logging in again they are asked whether they wish to reconnect to their previous/existing session.

The same session management rules apply for an Internet based Creation's shopper. Shoppers physically present at a Creation's location have extended session time thresholds and are automatically disconnected when the shopper exits the Creations location.

The download ShopLive Browser function 1108 handles the download of the ShopLive Browser to the shopper's terminal when initiated by the shopper. The function determines if the shopper has a current version of the video software and manages the download and installation of the plug-in. The module also updates the shopper master data to reflect current version of video software.

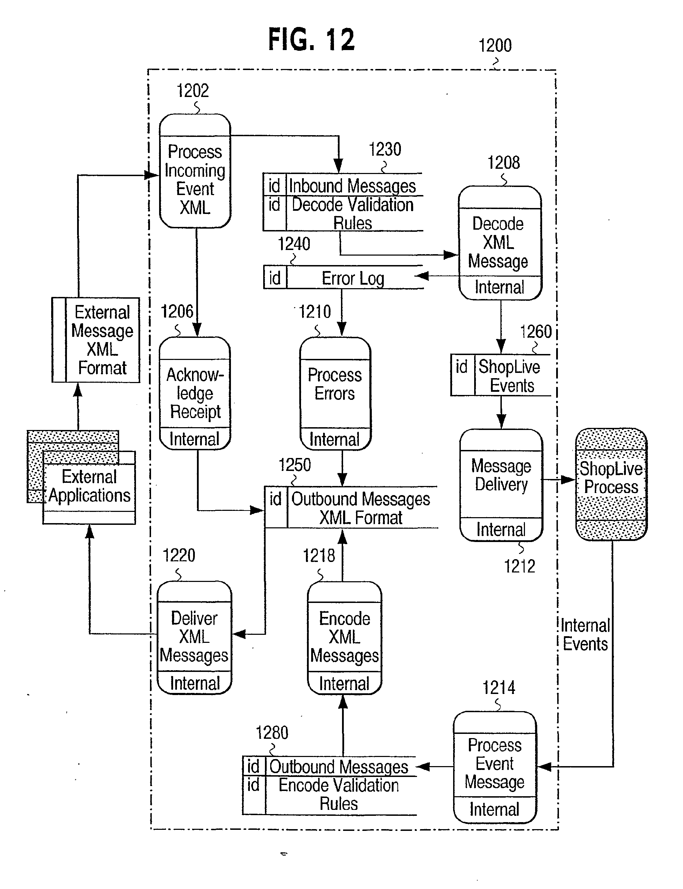

Referring to Figure 12, the session gateway framework 1200 uses a common gateway to manage the information exchange between the ShopLive application components and the application users. The session gateway supports the interaction between the components operating at the mall or merchant level and the ShopLive transaction Gateway (shopper session) running on the ShopLive servers. Additionally the Session Gateway Framework manages the distribution and routing of events from the ShopLive video sessions to the session logs. This module details the processing of XML messages rather than ShopLive system events or system notifications. The processing of those message events is detailed within other system processes.

The processing XML event module 1202 processes the incoming XML form external applications. The process identifies the XML form, performs preliminary validations and format checks and then registers the document within the inbound message queue 1230. Typical XML forms include external search results, inventory updates, catalog updates, delivery notification updates and other document communications from remote or external applications.

The acknowledge message receipt 1206 manages the creation of message acknowledgement receipt for those external applications requiring delivery confirmation. The receipts are automatically created and written to the outbound XML message table 1250.

The decode XML messages 1208 each have documented decode rules defined within ShopLive system tables. This process identifies the XML message type and decodes the message content according to pre-defined business processing rules into valid ShopLive events 1260. Any errors encountered are excluded and written to the system error log 1240.

The process errors 1210 creates XML error messages to be returned to the external processes notifying them that error were encountered with their XML transactions. The outbound XML forms are written to the outbound XML message table.

The message delivery function 1212 delivers messages to the appropriate application module. Events are recorded against the appropriate shopper session.

The process event message module 1214 processes the application events from internal processes to create outbound messages 1280. It identifies the outbound message, the correct XML form, performs format checks and then registers the document within the outbound message queue. Typical outbound XML forms include external search requests, inventory queries, purchase orders, sales confirmations and delivery notification updates.

The encode XML messages function 1218 documents encode rules defined within ShopLive system tables. This process identifies the XML message type and encodes the message content according to pre-defined business processing rules into valid external XML forms 1250.

The deliver XML messages function 1220, delivers (sends) secure messages to the appropriate external applications.

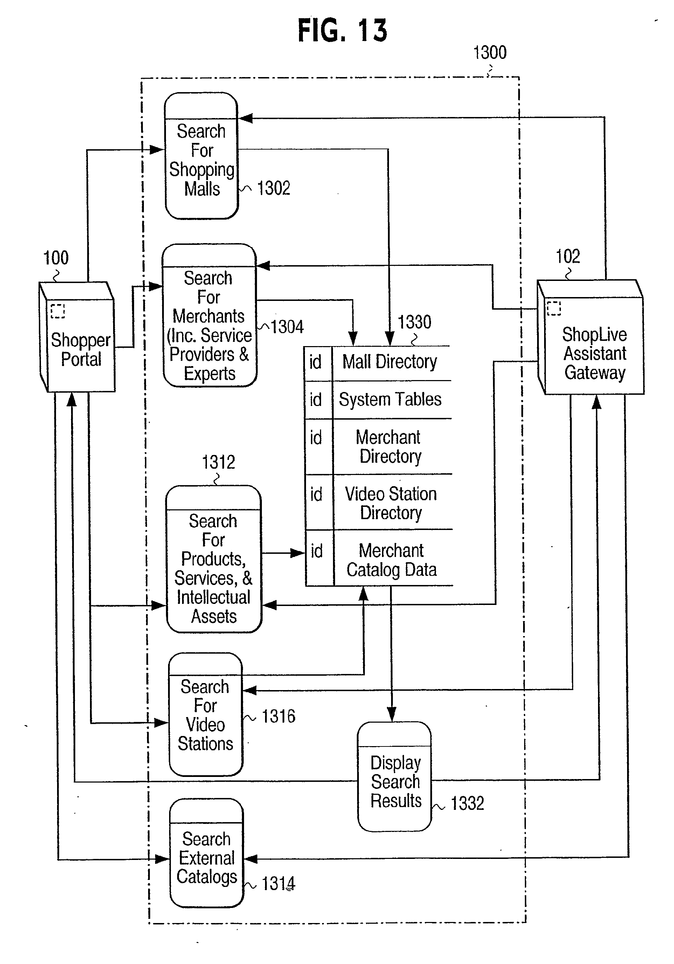

Referring to Figure 13, the search engine 1300 application provides the ability for a shopper or SLA to search for malls, merchants or products through a ShopLive search engine. The search engine accesses both ShopLive internal and external databases for this information.

The search ShopLive directories search engine 1302 allows the system user to search the directories of mall and merchant information 1304 using various search criteria. The Search engine 1302 allows the shopper (or other ShopLive system user) to search for shopping malls, search for merchants and search for video stations. The search engine utilizes intelligent search technology by pre-filling search fields using shopper mission and shopper preference data. Shoppers are able to search by name, geographic location, category and other criteria.

The search for products 1312 and video stations 1316 function allows the shopper to search the ShopLive catalogs for product information and video stations. The search engine uses shopper mission and shopper profile data to streamline the search process. The shopper is also able to search video catalogs for product information.

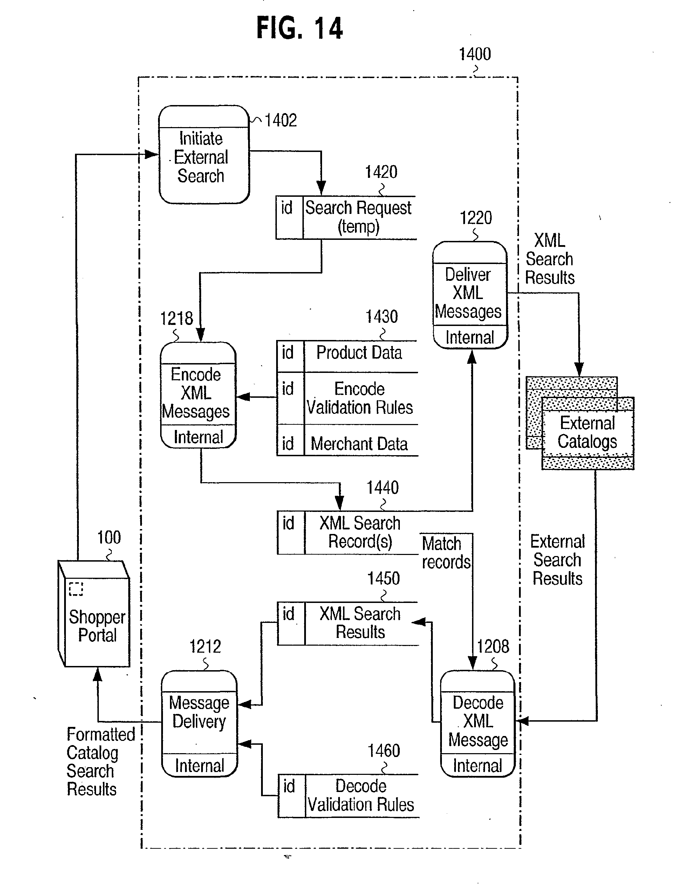

The search external catalogs function 1314 manages the search functionality for external merchant catalogs. The function is further defined in the Figure 14. The process is an external search that determines if the merchant maintains an external catalog, encodes search request in XML, transmits search request to merchant system URL, decodes search results and delivers search results to shopper. The function monitors the search results and automatically rejects those that exceed the time threshold for the external search API processing.

The tables that the search engines access on behalf of the ShopLive systems uses is represented 1330. These contain all necessary data for the malls, merchants, video stations and merchant catalogs. The data from these tables are used to prepare displays fro the shopper. The search results information from ShopLive is displayed 1332 as Internet web pages (typically in HTML, WML or other ANSII standard Internet device displayable format) to the ShopLive session. The Internet browser (i.e. Netscape or Internet Explorer) has this functionality built in to display these pages to a Shopper.

Referring to Figure 14, the search API process 1400 is automatically initiated when ShopLive merchant partners allow access to external catalogs. Process 1402 initiates external searches using the ShopLive intelligent search engine, which presents the shopper search criteria and creates a search request 1420. The search request is encoded into an XML message 1218 using product and merchant data along with XML validation rules represented in tables in 1430 to create an XML search record 1440.

The search record is processed and the XML messages1220 is sent to an external merchant. The decode XML message 1208 process then processes the incoming search results from the external catalogs. The search results are matched against the original search request 1440 and valid search results are written to 1450. Process 1212 message delivery processes the search results from 1450 decodes them according to the validation rules 1460 and then displays the formatted catalog search results to the shopper.

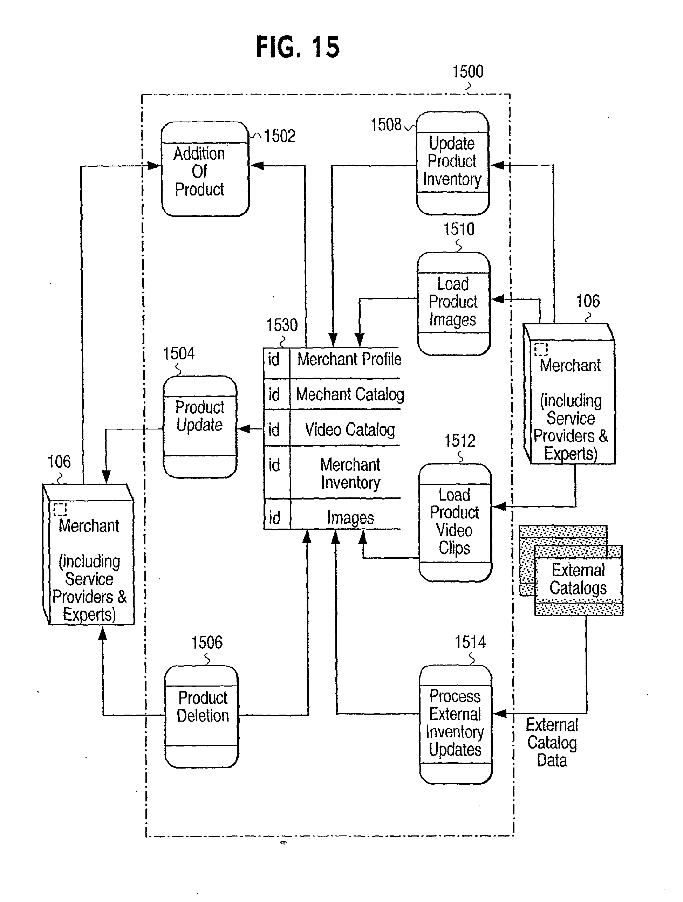

Referring to Figure 15, a catalog access sub-system 1500 manages the catalogues, images, contents, and video image banks for ShopLive merchants. The application provides access to catalog information for retail stores for the shopper. The application accesses the ShopLive catalog data directly for the shopper or provides a common interface to the catalog information stored in external databases.

The application 1500 provides access to catalog information on both retail and a chain level for the shopper. The application either accesses catalog data directly for the shopper or provides a common interface to the catalog information stored in external databases. This component supports catalog content as text, images or video images as needed. Catalog access supports the following functions. ShopLive administrators reserve the right to access and execute all of the below functions at any time, if needed:
The addition of product function 1502 permits a merchant to add new products to their catalogs. Any limits on how many products are allowed are not decided at this time. This includes all data about products including but not limited to product identification, characteristics, dimensions, usages and applications, pricing structures and reference material, including supporting products, comparable products, etc. Merchants are also able to upload multimedia data associated with the product at this time.

The system supports product-by-product addition through a user interface or batch update through an XML-defined product load batch file 1514. The batch adds new products and updates existing products.

Update of products 1504 allows merchant to login in to the ShopLive application and update existing products in their respective catalogs. They are able to change all information except production identification numbers, which is generated by ShopLive.

Merchants are also able to update products through an XML product loading batch file. The batch file inserts new products into the database, and update existing products.

Deletion of products 1506 allows the merchant to access their ShopLive accounts and suspend products temporarily or permanently but is not able to physically delete them. This is for security and integrity purposes. The system does not allow external mass deletion of products. ShopLive allows merchants to login into the system, query several products and deactivate them, but not send batch files through the XML interface for deletion.

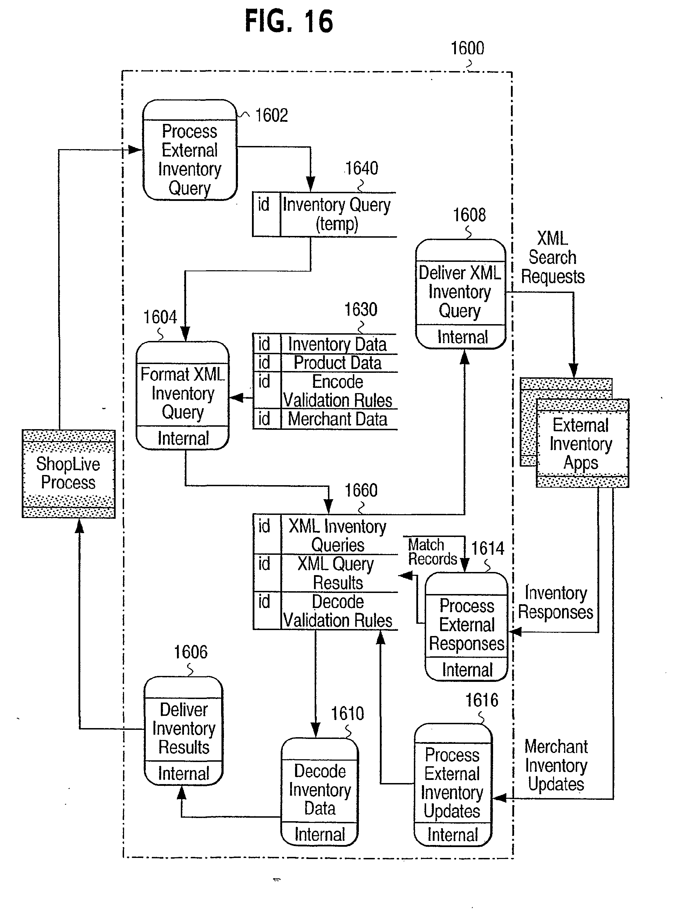

Update of product inventory 1508 allows inventories to be directly associated with products as product attributes. Merchants have the responsibility of updating product inventories for catalogs they have created in ShopLive on a regular basis. ShopLive checks inventory internally for internal catalogs (as opposed to external catalogs for inventory updates, see Figure 16.)

Product image loading 1510 allows products to have images associated with them. Merchants have the ability to upload true-color images associated with the products in their catalogs. Product inventory can be updated using XML batch file loading (product update).

Product video clip loading 1512 gives merchants the ability to load video clips showing products in various settings as well as for shopper assistance or Help purposes, e.g. where installation instructions are required for a product. The specifications for video clips or number of clips per product are not decided at this time.

Tables 1530 are used to hold the merchant product catalog data, video catalog data. Product inventory and other related merchant catalog information including product pricing. The merchant specific tables 1530 are updated through all of the catalog access functions 1502, 1506, 1508 1510, 1512, and 1514 feeding data into it.

Referring to Figure 16 . the external inventory access 1600 provides the ability to query catalog inventory availability at a store location level. Inventory that is managed by the ShopLive application is accessible immediately while external inventory system data is provided through a common interface. A common method of exchanging inventory data is documented and supported by participants in the ShopLive application inventory API and XML forms.

External inventory query 1602 queries external merchants' product inventory by sending an XML format query packet through its API. The merchants' systems sends back an XML-based response packet. A temporary external inventory 1640 is created. The format XML inventory query 1604 process utilizes inventory, product, merchant and XML validation rules 1630 to create the XML inventory query 1660. The inventory query is processed and the XML message 1608 is sent to an external inventory application. The response from the external application is processed by process external responses 1614 and written to XML query results 1660 The process external responses 1614 internally processes the incoming XML responses forms from external merchant inventory. Messages exceeding the time threshold are discarded. Remaining messages are formatted into ShopLive event or notification format and transmitted to the requesting application.

The query results are matched against the original query results 1660. The decode inventory data 1610 processes the incoming query results. Process 1606 delivers the inventory query results to the originating ShopLive process. ShopLive's underlying session gateway framework checks and routes XML packets to their correct destinations and handles the communication between ShopLive's internal system and the external merchant system. Process 1616 external inventory updates is a function that automatically handles external inventory updates from ShopLive merchants and initiates the inventory update process. The process external inventory updates 1616, is the internal process that provides the ability to process inventory updates from merchants for their online ShopLive catalog products and update the inventory amounts accordingly. Merchants can also update inventory using the catalog maintenance function.

Referring to Figure 17, the purchase fulfillment application 1700 provides the ability to confirm purchases on behalf of a ShopLive shopper, complete the purchase cycle and handle order fulfillment including pick-up, shipping and handling based on shopper preferences. Purchase fulfillment may be handled within ShopLive through an interface to an external Purchase Fulfillment application or through an interface with a retailer's application for that process.

The steps in this section only apply if ShopLive is performing the fulfillment function. The second case may be that ShopLive is acting as a conduit between the shopper and the retailer and sending the purchase request across to the retailer, who does the fulfillment. In this case, the steps given in this section are not required. Consequently, ShopLive notifies the shopper that it is not be able to provide status information about the fulfillment of their purchase and s/he must contact the retailer directly for the status.

The Purchase Fulfillment component in ShopLive has the following functions.

When the shopper confirms the order within the purchase gateway 900 an XML Purchase Order is generated and sent to the Purchase Fulfillment 1700 component. The Purchase Order is handled by the Process Purchase Request 1702 function that validates the format and writes the PO to a temporary table, incoming purchase order 1704. The inventory check and update process 1706 confirms that the inventory is available for the merchant using information from tables 1770. After doing all internal processing, the inventory record is updated to reduce it by the quantity of the shopper's purchase and a customer order and order slip record is created in the appropriate application tables 1704. In case of an external inventory query, the information required by the Inventory API 1600 is transmitted in the form of an XML request for the external system to process.

Once the inventory has been updated, the function sales slip generation 1710 creates a sales slip that is transmitted to the ShopLive merchant along with the customer order details.

The process order slips 1712 function creates an XML order slip for use by the merchant in preparing the shopper's order.

The process delivery notice 1714 function is used by ShopLive to provide shipment delivery details to the external delivery applications 1020. The Delivery sheet notifies the shipper of the shipment details. The merchant is able to cross-verify this through the sales slip they have received from ShopLive.

Once the shipper has picked up the purchase from the pickup location, they send a shipping confirmation to ShopLive that is processed by the function process shipping confirmation 1716 that automatically matches the confirmation to the customer order and updates the tables in 1704.

After delivering the shipment to the delivery location specified on the delivery slip, the shipper notifies ShopLive of delivery confirmation via a XML delivery details form that is processed by the function process delivery confirmation 1718. The customer order information 1704 is automatically updated.

The shopper can logon to ShopLive anytime and check the status of their shipment since ShopLive has done the booking by interfacing with the shipper and the booking number is available.

The produce warehouse and inventory report function 1708 generates retailer warehouse order reports and inventory update reports that can be used by the retailer to track ShopLive generated orders within their store inventory, create delivery slips and provide inventory control.

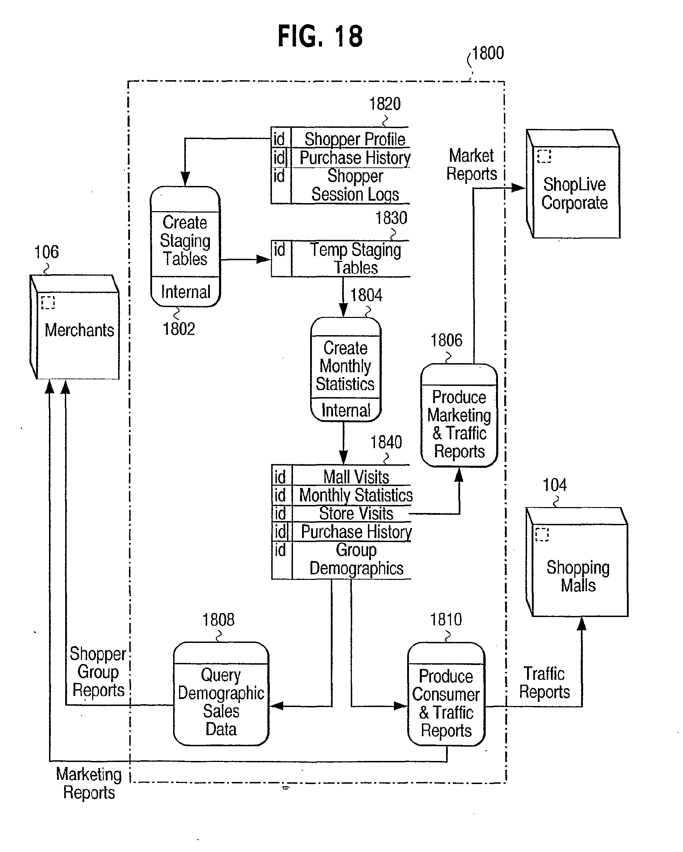

Referring to Figure 18, the application 1800 provides shopper profile information to registered merchants or merchants requiring profile information. Trend and market analysis reports by demographic groups are available for data mining by merchants and malls. Merchants and malls are able to access and print reports using the ShopLive reporting functions.

The create staging tables internal batch process 1802 creates temporary staging tables, which are used to compile the statistical and marketing analysis reports for the data warehouse. The batch processes extract the relevant data from the ShopLive shopper, purchase history, session and system tables 1804 and create temporary staging tables 1806.

The create staging tables is an internal batch process that creates temporary staging tables 1830 that are used to compile the statistical and marketing analysis reports for the data warehouse. The batch processes extract the relevant data from the ShopLive shopper, purchase history, session and system tables 1820 and create the temporary staging tables and statistical tables for data mining purposes. The process compiles statistics on a shopper demographic basis concentrating on the following types of data; frequency of visits, duration of visits, number of retailers visited, number and amount of purchases, average purchase amount, advertising statistics, purchase trends, favorite products and brands.

The create monthly statistics internal process 1844 uses the temporary staging tables 1830 to update ShopLive transaction tables 1840 with demographic monthly statistics for merchants, demographic groups and individual shoppers.

The produce marketing and traffic reports function 1806 produces the various ShopLive corporate marketing and traffic reports produced periodically (weekly, monthly etc) for market analysis and billing purposes.

The query demographic sales data function 1808 accesses transaction tables 1840 to allow authorized merchants to view demographic sales data compiled by ShopLive for marketing purposes. Merchants are able to utilize the sales information for planning and marketing purposes.

The produce marketing and traffic reports 1810 produces various reports for retailers and Malls on the statistical data gathered by the ShopLive application. Various reports detailing consumer sales, merchant traffic and mall activity are available to merchants, malls and ShopLive marketing staff members.

Consumer purchase data (subject to consumer privacy regulations) is available for statistical purposes and other data mining exercises. Consumer purchase data (subject to consumer privacy regulations) is available for statistical purposes and other data mining exercises. Data collected within the data warehouse (reference Figure 18 marketing reports and shopper profiling) is available for analysis by in-house or external data mining engines.

Initially the ShopLive application collects shopper behavioral data and focusing on:
compiling and analyzing data for shopper, merchant and group demographics,
collecting and analyzing consumer responses to surveys,
collecting and analyzing shopper purchase history,
collecting and analyzing the buying experience,
performing human factor analysis for marketing purposes,
performing retail trend analysis,
measuring merchant and sales staff sales ability, and
measuring effectiveness of ads and promotions via merchant sales.

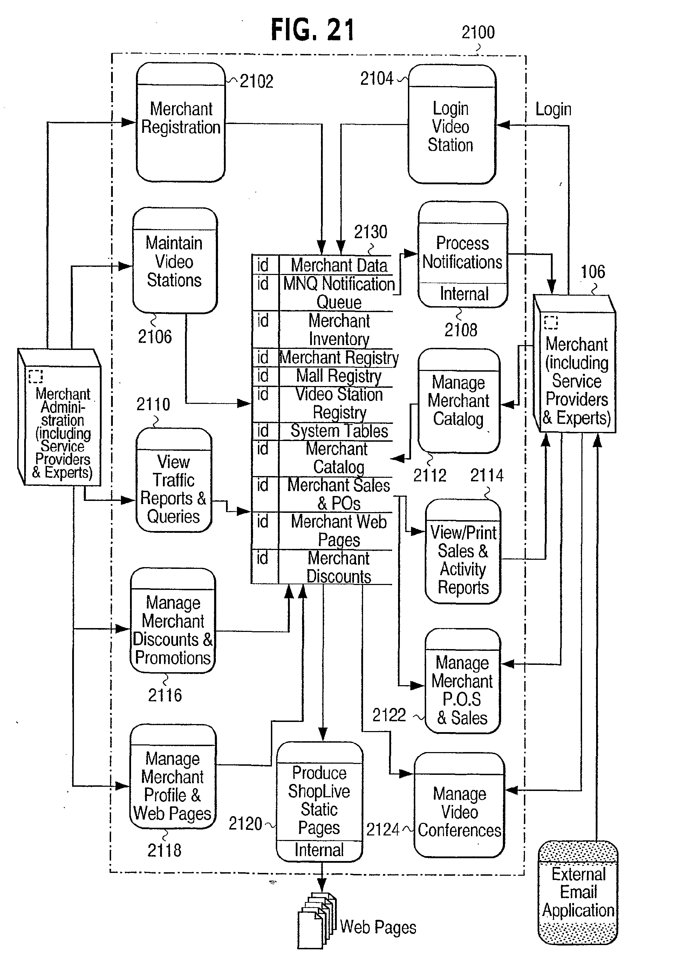

ShopLive merchant websites host a profile for each merchant or Creation's tenant registered with the application. The profile provides shoppers with a summary overview of the merchant, their services and their location specific information including links to their online catalog and inventory. ShopLive provides the tenant the tools to manage their profile information including access to system utilities to upload profile content to the ShopLive servers. The suite of tools available to the merchant is covered in Figure 21 merchant administration systems (reference 2318 manage merchant profile).

ShopLive allows registered merchants to deliver customized or personalized content to the shoppers when accessing their websites, This feature allows the merchant to automatically provide a different look and feel based on the shopper preferences, merchant marketing preferences and shopper demographics. The ShopLive application tracks consumer behavior and sales statistics for marketing and trend analysis purposes.

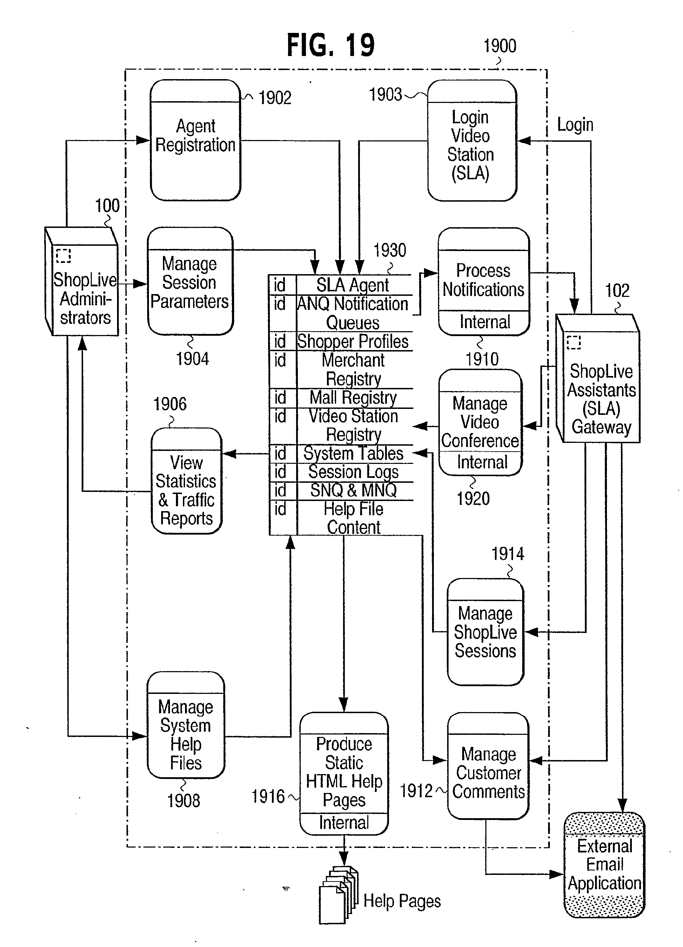

Referring to Figure 19, the customer relationship management sub-system 1900 allows ShopLive to handle customer relationship management services from shoppers, merchants and malls. The system provides 3 levels of assistance for the ShopLive shoppers access to online Help, email responses to shopper comment forms submitted by the shopper or merchants and direct contact with SLA through ShopLive video sessions.

The agent registration function 1902 allows the registration of ShopLive agents within the ShopLive application. Once registered each agent has access to the CRM customer management tools through login 1903. Agent registration supports the concept of remote or virtual agents. Virtual agents are networked from remote locations into the ShopLive system to serve as SLAs. Using virtual agents allows the merchant or vendor to staff its storefront 24/7 without having a dedicated sales person. Virtual agents have the full video and voice connection to connect into the ShopLive network and have access to the product information data bases to pull up product availability, pricing, specifications, shipping schedules and the like.

The manage session parameters function allows the ShopLive administrator to manage the session parameters 1904 associated with each user session including priority.

The view statistics and traffic reports function 1906 allows the ShopLive administrator to view and print traffic and shopper visit reports for malls and merchants. These reports are combined with third party traffic reports for marketing and data mining purposes.

Through the manage system help files function 1908 the administrator updates the ShopLive system based help files. ShopLive provides an Internet database of ShopLive Help information and frequently asked questions (FAQ), which the shopper can browse at their leisure. Access to ShopLive help functions is available for all ShopLive shoppers.

Shoppers and merchants can contact a personal shopper should they have any queries that the ShopLive Help files or FAQ pages are unable to address. In some instances the SLA complete a customer comment form on their behalf and submit the comment for resolution by the CRM group. The request for SLA assistance is processed as an agent notification using the internal ANQ notification process 1910.

The manage customer comments function 1912 allows the management of customer comments by the customer service representatives or SLA agents. Customers (shoppers, merchants or malls) can record complaints, issues or compliments using a customer comment card from the ShopLive website. Upon receipt of a customer comment form the customer receives a personalized email acknowledging receipt and assigning a unique ID for tracking purposes. The customer can check the status of their comment through the ShopLive application. Once an issue is resolved the resolution is transmitted to the customer and the issue closed.

The manage ShopLive sessions function 1914 allows the SLA to manage the shopping sessions when they are connected with a shopper via the ShopLive session gateway framework. As well as manage videoconferences 1920 between a shopper and other shopper participants. The SLA respond to notifications from shoppers, contacts merchants on behalf of a shopper, make appointments for a shopper with a merchant, performs searches on behalf of a shopper, push web pages to a shopper session, queries the shopper's mission, review shopper's session events to determine shopper's activity or query the shopper's profile data. All of this information is contained in the tables represented by process 1930.

The produce static HTML Help Pages 1916 is an internal system component, which automatically creates the static HTML Help and FAQ pages, once the system administrator has updated them. Pre-building HTML pages is more efficient than accessing the ShopLive database for each user.

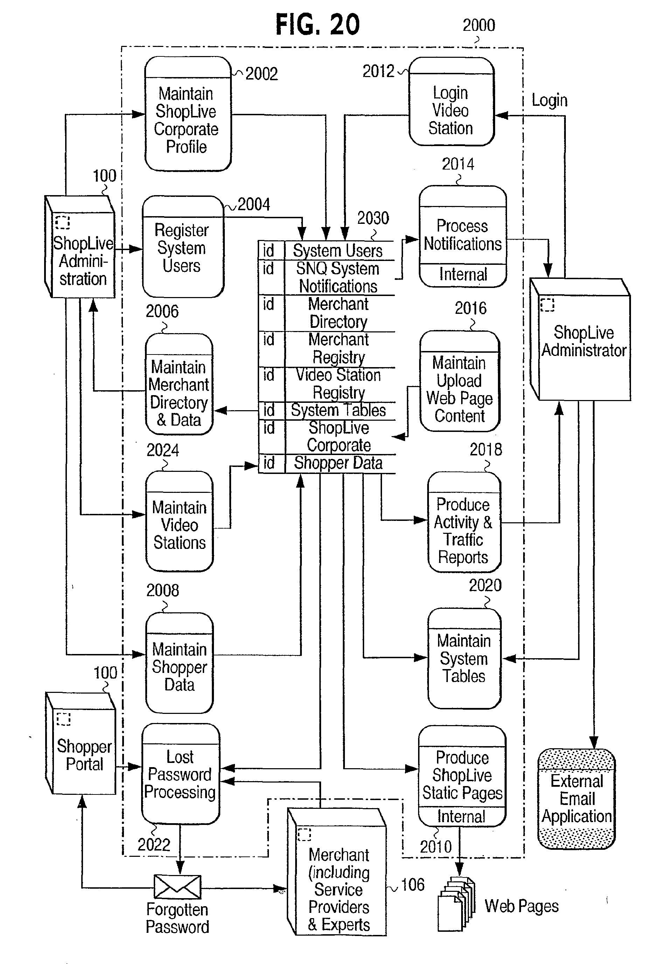

Referring to Figure 20, the ShopLive administration system 2000 consists of components and sub-systems required to manage the system control files, system users and system tables. It manages the database and administrative functions for the ShopLive applications gateways. The maintain ShopLive corporate profile function 2002 allows the administrator to update the ShopLive corporate information, which is used to populate the profile web pages. The register system users function 2004 allows the administrator to register system users including merchants, mall agents and personal shoppers or SLA as well as assign various security levels to the individuals. The maintain mall directory data function 2006 allows the administrator to register and update mall directory information. Each mall is registered in the ShopLive application and provided initial access and security authority.

The maintain shopper data function 2008 is used by the administrator, to manage the shopper sessions and key shopper information. The administrator can update shopper registration data, reset shopper passwords, suspend or reinstate and query shopper data and produce reports.

The produce ShapLive static pages generic function 2010 automatically creates HTML web pages from ShopLive corporate data once data has been updated. Pre-building HTML pages is more efficient than accessing the ShopLive database for each user.

The login video station function 2012 processes the login process for each video station agent. It establishes the session and updates the agent availability table used by the application when assigning shoppers to agents.

The process notifications function 2014 is used by ShopLive to manage the video agent notifications to agents, merchants and shoppers and route them to the appropriate agents via traffic control. This function handles routing of notifications to agents based on availability and geographic location, management of agent responses to notifications, managing SNQ parameters and error tracking, automatic creation and routing of informational messages to shoppers, merchants and ShopLive agents, queue management and automatic matching of message responses and clean-up.

The maintain and upload web page content function 2016 is handled via WS-FTP or similar package. This function provides the ability to transfer completed web pages to ShopLive servers. Control of page versions is typically handled manually or via a third party package.

The produce activity and traffic reports function 2018 provides ShopLive traffic and activity information to the ShopLive administrator. Some reports are based on ShopLive data and other reports are produced using third party web traffic analysis programs executed over the ShopLive activity logs.

The maintain system tables function 2020 allows the administrator to add, update, view and delete entries from the various ShopLive system tables 2030. The tables are used throughout the Shop Live application include tables containing city names, state names, product categories, product brands, search criteria, business rules and various other tables.

The lost password processing function 2022 processes a request for a lost password from a shopper or merchant and then sends the password via email to the shopper as requested.

This function 2024 allows the administrator to register and update video station information for each of the ShopLive properties. Each video station is registered with the ShopLive application to accommodate searches, video transmission and association with merchants.

Referring to Figure 21, the merchant administration system 2100 manages the registration of merchants, locations and departments within mall properties as well as in store video stations.

The merchant registration 2102 allows the systems administrator to register and update merchant information for each store within a merchant, mall or Creation's location. This function allows merchant registration and the association of a merchant with merchant catalogs and inventory, merchant profile, associate a merchant with a physical store, mall or Creation's location, establish link to merchant profile information, define store departments and associate video stations with a merchant or store front location. This information is stored within the information represented in table 2130.

The manage merchant profile function 2118 allows the merchant administrator to update the merchant profile information for a specific merchant location. Additional web-site content pages can be uploaded using ShopLive system web tools such as produce ShopLive static pages 2120.

Once a merchant logs onto their video station 2104, the ShopLive application commences delivering process notifications 2108.

The maintain video stations function 2106 allows the administrator to register and update video station information for each of the ShopLive properties. Each video station is registered with the ShopLive application to accommodate searches, video transmission and association with merchant. The administrator may also view traffic reports and perform queries 2110.

The view/print sales and activity reports function 2114 allows the merchant or merchant administrator to print the sales and site activity reports for the various merchants. Reports may also be viewed over the Internet for registered merchants.

The manage merchant discounts and promotions function 2116 allows the merchant to enter/update product discounts and promotions into the ShopLive or Creation's catalog. The application supports various promotions and discounts, which are processed during the purchase fulfillment processing.

The manage merchant catalog function 2112 allows the merchant or merchant administrator to enter update product information within the merchants online catalog.

The manage merchant POS and sales interface function 2122 allows the merchant to print or view sales activity specific to their location. This function integrates merchant POS systems to the ShopLive application. (e.g. Integration with ASP POS solutions).

The merchant is able to manage and schedule videoconferences 2124 for their video stations.

Referring to Figure 22, the mall administration system 2200 manages the registration of malls, mall calendars, corporate profiles and mall related functions within the ShopLive application. The mall registration 2202 allows the systems administrator to register and update mall information. This function allows mall registration and the association of a storefront within mall. This information is stored within the information represented in table 2230.

The maintain mall profile function 2204 allows the mall administrator to update the mall profile information for a specific mall locations. Additional web-site content pages can be uploaded 2216 using ShopLive system web tools such as produce ShopLive static pages 2220.

The maintain mall center calendar and events function 2406 allows the mall administrator to maintain the calendar and event information for each mall property.

The maintain mall directory 2210 function allows the mall administrator to maintain the directory of merchants and storefront locations within the mall. The administrator can associate merchants or business with specific mall physical locations and maintain mall calendar and events 2206. The administrator may also view traffic reports and perform queries 2208.

The view/print sales and activity reports function 2218 allows the mall or mall administrator to print the sales and site activity reports for the various merchants. Reports may also be viewed over the Internet.

Once a mall logs onto their video station 2212, the ShopLive application commences delivering process notifications 2214.

ShopLive uses standard STMP features to send emails to shoppers and agents. Each agent or merchant requires access to an email package to process and respond to the emails. ShopLive provides the capability for shoppers to enter their zip code and provide map Internet interactive mapping services directions to the nearest mall or merchant location. The application uses the standard Internet interactive mapping services interface for data collection from the shopper. ShopLive interfaces to various shipping and delivery providers such as FedEx and UPS delivery applications. It uses standard XML delivery notifications to these providers. ShopLive interfaces to external credit card processing financial institutions. Purchase transactions comply with the industry standard secure protocols dictated by the providers. Sub-systems and functions are required to manage the ShopLive web properties. Features supported by this third party product are web site content management, web site tracking and monitoring, ad banner scheduling and management functions and manage mall or merchant Specials and electronic flyers

Figure 23 represents the ShopLive Loyalty Program process 2300 by which the application at the mall or shopper level interfaces to loyalty programs and identifies ShopLive shoppers via registration numbers. The loyalty program application may be a ShopLive implemented application or an external application. The sub-system provides the following functions.

ShopLive offers a variety of loyalty programs to shoppers through internal and external programs sponsored by both merchants and manufacturers ShopLive views loyalty programs as a marketing solution tool and has been designed to offer the shopper the utmost flexibility when selecting a loyalty program.

During the registration process, shoppers are provided the option of selecting from one of several loyalty programs 2302. The rewards offered by the loyalty programs are structured to the shopper's preferences. Additionally ShopLive supports integration to external loyalty program providers (merchants and manufacturers). Typical loyalty program offerings include coupon-based programs; rebates based on inventory and points accumulation programs for future product or service redemption.

The flexible loyalty programs allow merchants and manufacturer to target loyalty program members with special offerings and promotions. Merchants and manufacturers can determine which programs are the most effective for securing and maintaining customer loyalty. Merchants and manufacturers are able to determine effectiveness of their marketing efforts using loyalty programs as an effective marketing tool.

ShopLive can accumulate various rewards 2306 and present them in a single statement to the shopper. Because it has the shopper's personal data and merchant data it can process the rewards for the shopper.

The ShopLive application at the mall or shopper level interfaces to loyalty programs and identifies ShopLive shoppers via their ShopLive registration numbers. The loyalty program application may be a ShopLive implemented application or an external application. The sub-system provides the following functions.

The loyalty shopper registration function 2302 provides the ability to register ShopLive shoppers and issue them loyalty cards linked to their shopper accounts. ShopLive provides shopper profile data 2330 from internal databases to avoid entry duplication.

The process point accumulation function 2306 provides the ability to assign loyalty program points based on shopper purchases or merchant site visits. This is usually done in the shopper's shopping cart 800. Purchase information is processed during actual shopper purchases or calculated during data mining batch processing of shopping session logs.

The process loyalty program redemptions function 2304 manages the redemption of loyalty program points by a shopper. The function processes redemptions for gift certificates, merchant products or live discounts during shopper purchases.

The produce shopper reports function 2314 produces periodic reports for shoppers and merchants detailing point's accumulation, merchant traffic and point's redemption by the shopper. Loyalty program reports may be emailed to ShopLive shoppers.

The manage loyalty program promotions function 2308 allows the loyalty program administrator to maintain the various program promotions. The system allows the creation and update of business rules associated with the loyalty program promotions.

Salespersons (merchant or SLA) can interact in real time through ShopLive Video 300 with shoppers and offer unadvertised bonus rewards. This allows merchants and other salespersons to incentivize their shoppers in real time to close deals. Additionally, Merchants may customize rewards programs through the Manage Loyalty Programs Promotions 2348 feature. The Process Gifting of Rewards and Bonuses to other Shoppers 2316 enables shoppers to give points and rewards earned to other Shoppers that are registered with the ShopLive network.

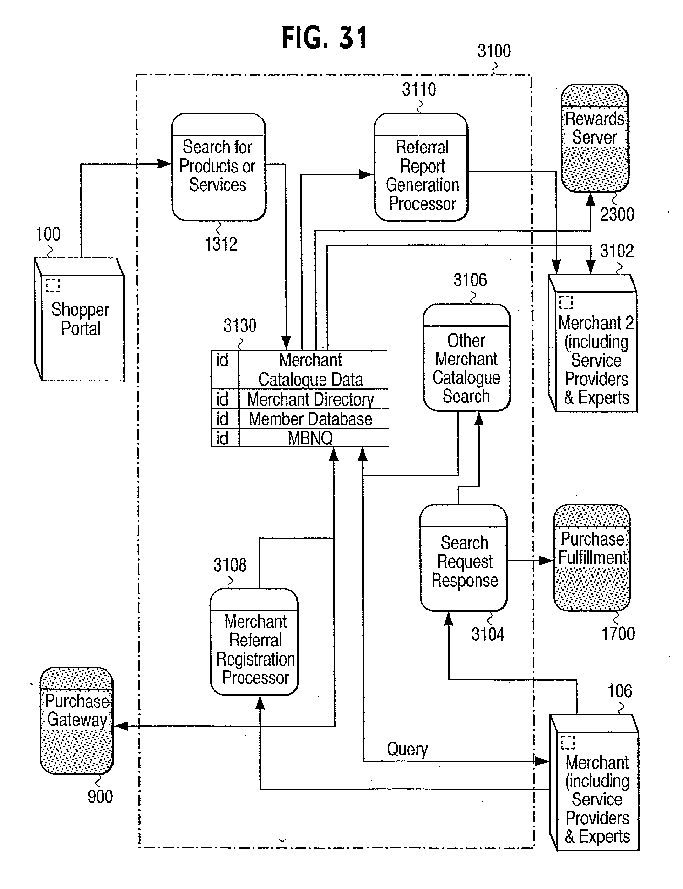

The Referral Fees Processor 2318 calculates and distributes referral fees to merchants for referring shoppers to other merchants through the Referral Server 3100 (See Figure 31). MNBQ are delivered to merchants to notify them of receipt and distribution of referral fees. The Rewards Server 2300 includes credit generation software 2318 for calculating member referral fees. Referral credit may be calculated in any of a number of ways depending on the member and merchant business relationship, and may be provided to the member on a periodic basis, such as at the end of each month. For example, the member may be paid a percentage of the list selling price or a fixed finders fee. As indicated above, compensation payments may be made automatically using an appropriate electronic payment method. The merchant's account is credited with a referral fee and both merchants have a satisfied shopper.

Because the member enrollment and referral tracking functions are automated (in whale or in part), the referral services provided by the members may take place with little or no human supervision or intervention by the merchant. In addition, because payment to members is performance-based (e.g., based on sales resulting from member referrals), the merchant need not be concerned with the effectiveness of any given referring member site. Member merchants with online interactive capability, such as ShopLive.com merchants, can offer their shoppers referrals during a session.

Process External Loyalty Program Data 2310 function allows the Loyalty program to accept shopper data and point updates from external loyalty program providers. This allows the external application to be synchronized with the ShopLive program. Information is typically received from external programs in standard XML update transmissions. Additionally, shoppers can spend points earned as a form of payment through the purchase gateway 900.

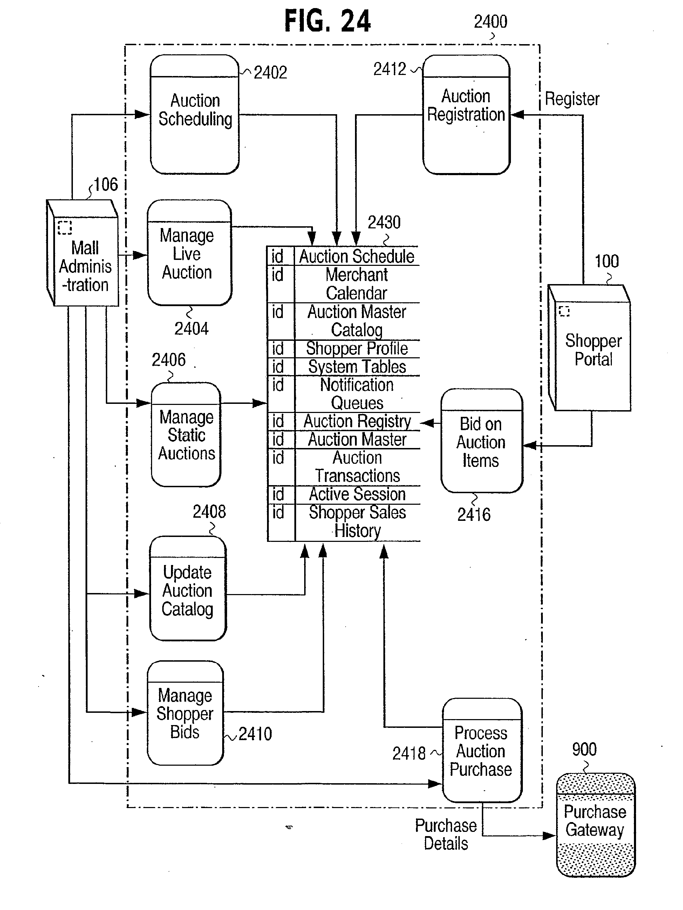

Figure 24 represents ShopLive auctions that provide system functions to manage both dynamic and static auctions by ShopLive merchants 2400. The video conferencing software provides the video support for the dynamic auctions including scheduling and fulfillment within the ShopLive environment. ShopLive provides an interface to an external third party auction application service provider (ASP). A typical auction component provides the following functionality:
Auction scheduling function 2402 allows merchants to schedule live video auctions and static auctions within the ShopLive application. Merchants update the auction schedule, detailing the auction parameters including dates and products to be included in the auction. Merchants can update the list of participants to be included during automatic notification processing.

Auction registration function 2412 allows shoppers to register for a scheduled auction and be assigned an automatic bid code for dynamic auctions. The function also handles the notification of participants who have registered for an auction. Live video may be used to conduct the auction and preview sales items.

Manage live auction this function 2404 provides the merchant the automated tools to manage the live auctions. One way to do this is using videoconference capabilities. Merchants are able to record bids, interact with shoppers during the auction and manage time limits.

Manage static auctions this function 2406 allows the merchant to manage the processes associated with static auctions. Merchants can review static bids respond to shopper queries and accept auction registrants and manage auction time limits.

The update auction catalog function 2408 allows the merchant to maintain the catalog that holds product description of the items to be auctioned. The merchant can add explanatory text, item quantities, graphic or video images as well as setting reserve bid for specific items.

Bid on auction items function 2416 allows the shopper to submit bids for both static and dynamic auctions. Shoppers submit automatic bids, define bid ranges and use this process to track active products currently being auctioned.

The manage shopper bids function 2410 allows the ShopLive application to process bids for products by shoppers during live or dynamic auctions. The function monitors bids from registrants communicate bids to merchants during the auction and manage notifications to shoppers of bid results.

The process auction purchase function 2418 allows the merchant to process the shopper auction purchase once the auction has been successfully completed. Once a shopper's bid has been selected the process sends a message to the shopper notifying them of a successful bid, compiles purchase details and interface to purchase gateway for credit card processing to handle the purchase confirmation with the shopper credit card processing. The Shop Live auction function accesses system tables 2430 to read and update auction information and ShopLive tables as necessary.

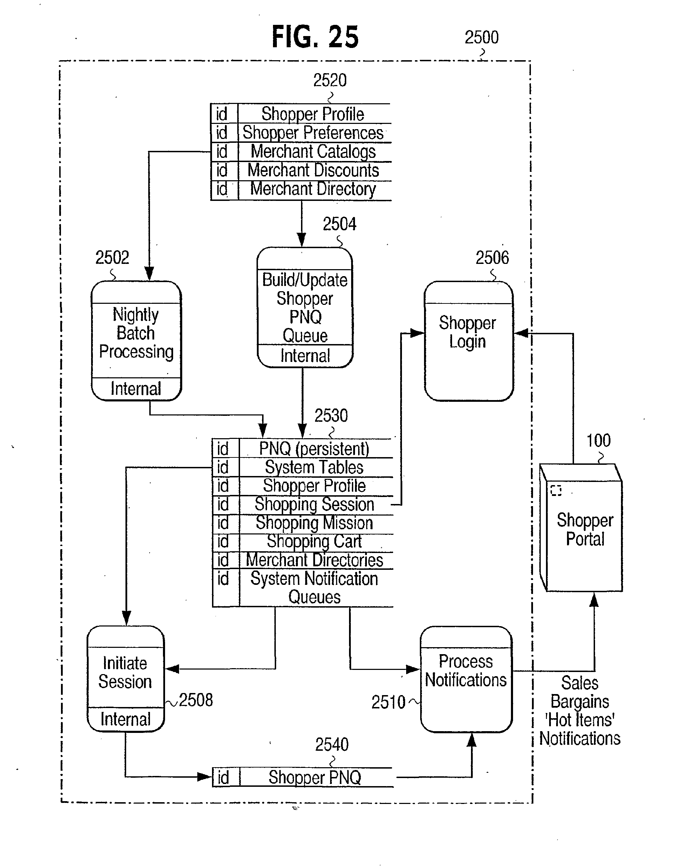

Figure 25 represents the process for nightly shopper notifications 2500. The ShopLive application incorporates a module to handle notification of sale items or hot items flagged within the shopper's personal folder. This module reads the shopper's notification queue 2530 and alerts the shopper to notifications of specials or sale items. The module manages login notification 2510 by alerting the shopper when they login 2506 and alerts shoppers immediately of sales or bargains through the PNQ via the process notification 2510 processing. Wireless notifications of sales items for shoppers may also be used.

The nightly batch processing function 2502 makes use of the personal notification processing function 2510 to alert shoppers to sale items or automatic personal reminders. The application updates the notification queues in both real-time and as part of a scheduled batch nightly process.

The build/update shopper PNQ Queue function 2504 reads the shopper profile and calendars items from the ShopLive tables 2520 and builds or updates the shopper's persistent PNQ 2530 with reminders or notices of product sales from preferred merchants or for designated hot items.

When the Shopper login 2506 occurs, the initiate session internal process 2508 executes to create the session PNQ 2540. The PNQ 2540 contains all of the shopper notifications. The PNQ Queue 2540 uses the process notifications function 2510 to deliver notifications, sales items and scheduled events to the shopper's session.

### Creations Model

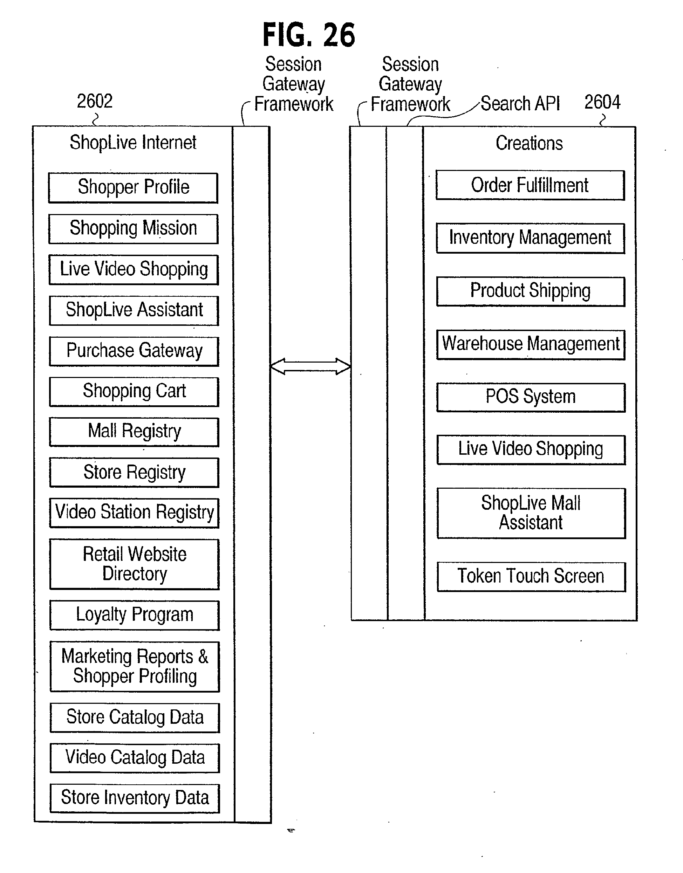

Referring to Figure 26, the diagram is a pictorial representation of the proposed implementation of the ShopLive application in the environment. It describes the Creations application in terms of functionality, services availability and information collections. The Creations implementation is based on ShopLive components that are clustered together to provide the supporting functionality. The Creations implementation is an example of specialized applications of the ShopLive technology, however the underlying approach to clustering components is the basis for multiple implementation.

The Creations implementation describes the functional areas from the perspective of the services provided by ShopLive Internet and the Creations retail merchants to both the Internet and walk-in shopper. The diagram consists of two primary groupings of components and inherent services that are described below.

ShopLive Internet 2602 functional group is a composite of ShopLive functions supporting the Creations implementation. Shoppers, ShopLive administrators and ShopLive CRM functions services are supported from this group of components. The individual components and their related information are depicted as functional areas in the diagram and relate back to the primary and secondary components previously described. The session gateway framework component of 2602 manages communication and exchange of information with the other functional areas. The arrows within the diagrams depict information exchange. Typical services or functions available to Creations system users include access to shopper profile functions and services, shopping mission management services, video camera delivery and management services, SLA processing (services, assistance and data), purchase gateway functions and services, shopping cart functions, mall registry functions, store (merchant) registry functions, video station registry services, Creations merchant websites and system profiles, loyalty program services, shopper profiling and various marketing reports for Creations merchants, merchant catalog functions and data, access to video catalog functions and data, merchant inventory services and ShopLive search engines.

The Creations functional area 2604 describes the services and functions provided by a typical Creations Mall within the application. Creations system users interact with ShopLive, merchants and shoppers via the Session Gateway Framework component. Typical services or functions available to the Creations location are access to ShopLive search engines, retail merchant directory information, inventory management services, product shipping services (including external applications such as FedEx), merchant access to catalog administration services, access to video catalog administration services, warehouse and inventory management services, future integration to POS systems, access to live video shopping services, access to customer order administration functions, the Creations token touch pad system, provision and access to SLA functions by the mall assistants and mall specific marketing and traffic information reports.

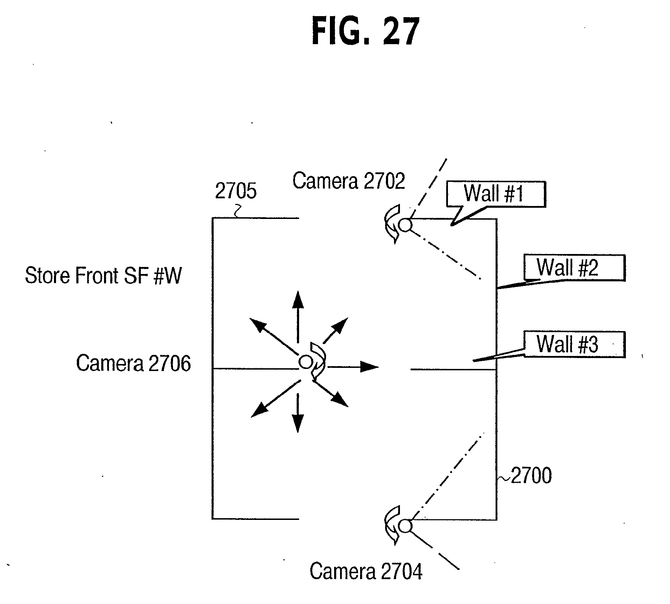

Referring to Figure 27 video management system for the ShopLive application provides video management services for the merchant and video shoppers. The ShopLive application design closely integrates the video cameras with the merchant products in a typical store location to support the live shopping experience for the Internet shopper.

The cameras are closely integrated with the merchant product catalog and allow Internet shoppers to select a product from the online catalog and have the camera immediately focus on that product. The shopper selects an alternate view of the same product by using one of the overlapping cameras or by manipulating the camera movement via the Internet. Built in video management intelligence allows the software to determine the products which the shopper is viewing (based on camera location feedback and video grid analysis) and provides detailed product information from online merchant catalogs. The video management software allows the shopper to be automatically passed to an adjoining camera during storefront browsing sessions.

Correct positioning and layout of in-store video cameras provides optimum viewing functionality for Internet shoppers. ShopLive has completed extensive analysis to arrive at the layout specifications for deployment in a retail location. Video Camera layout specifications for a typical Creations location have been developed specifically to address optimal viewing angles and camera location, maximum merchandise coverage, overlap of viewing coverage areas to provide for multi-camera coverage, and association of products to pre-defined grid locations within a merchant storefront.

The Video Station Layout Specification diagram, Figure 27, is a plan view of the positioning of video stations within a Creations location 2700 to provide optimal camera coverage of merchant locations. In the attached diagram cameras 2702 and 2704 provide overlapping coverage of the multiple walled storefront 2705. A typical video camera 2706 provides partial coverage of four surrounding storefronts. Locating the video cameras 2702 and 2704 in a staggered fashion at the end of the storefront walls gives the maximum coverage for each camera to a remote video shopper. In this arrangement remote video shoppers have access to several cameras for viewing merchandise within a storefront to achieve a viewing experience comparable to being in the storefront in person. This combination of cameras effectively sweeps the vertical and horizontal planes of storefronts to create the visual equivalent of an in person viewing of merchandise.

Aligning the cameras on tracks or like assemblies to between views or to track along a course is another way to use cameras to facilitate a real viewing environment. Camera movement can simulate the movement of a shopper through a shopping area to give the same look and feel of a visual shopping experience. Algorithms may be employed to track the cameras to selected areas to draw the shopper's attention to selected items or displays.

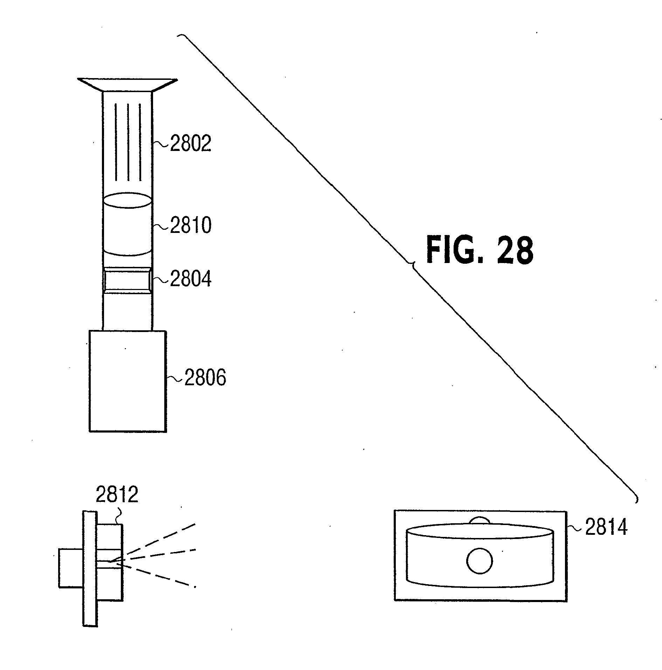

Referring to Figure 28, incorporating the video cameras and touch screen tablets into pre-assembled and pre-wired modular columns allow the deployment of the ShopLive vide camera technology into existing or new retail merchant locations. The modular columns are designed to provide a sturdy platform to enable the ShopLive technology yet be unobtrusive in the retail environment. Video camera workstations are available making use of the latest technology including RFI (Radio Frequency transmissions) to allow them to be stand-alone units without physical wiring restrictions.

Shown is a standing column 2802 incorporating a touch screen 2804 for accessing ShopLive. The column 2802 rests on a base 2806. Within column 2806 is one or more hinged video cameras and associated motors 2810 movable to view items within a 360-degree arc and hinged to move vertically. A wall unit 2812 is also shown demonstrating a video camera attached to a wall mount. A front view of the movable camera is shown in module 2814. Alone or in combination, these cameras can be used in an existing store setting to allow remote viewing of the merchandize but not disrupt or interfere with the retail operation.

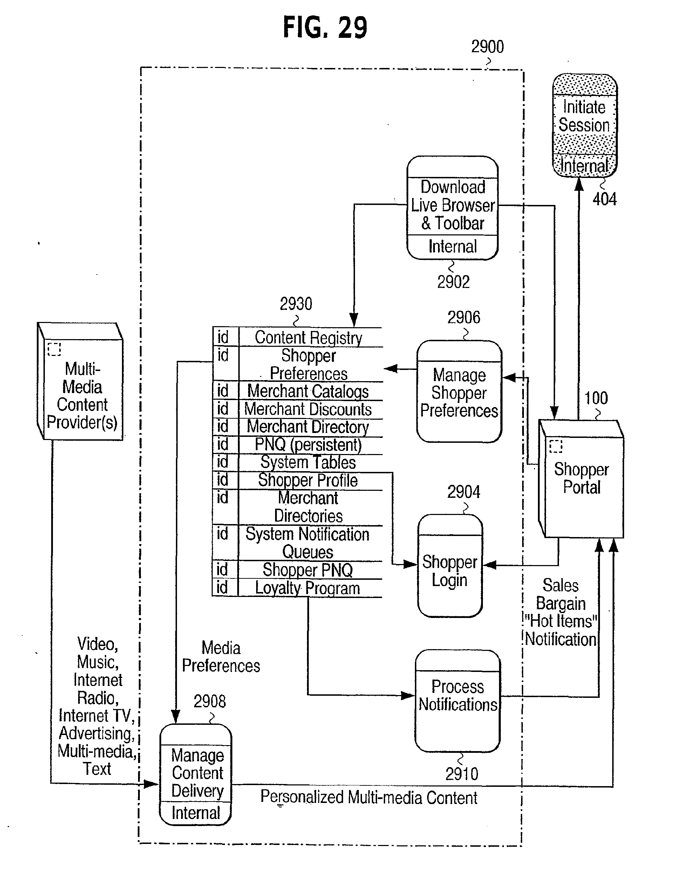

Referring to Figure 29, live Browser 2900 is a specialized application of the ShopLive video technology for delivering multi-media content for registered ShopLive users and to broadband subscribers.

The Live Browser consists of an Internet browser and an interactive custom screensaver. When a registered shopper is surfing the net the Live Browser displays custom content based on shopper preferences to a reserved area live screen real estate of the browser menu. The content consists of news, music videos, financial news, Internet radio, advertisements and other Internet multi-media content. The Live Browser also feature special toolbar items that allow the shopper to complete ShopLive application functions with a single click of the mouse. The interactive screensaver displays personalized content based on shopper preferences, when the PC or like portal is idle. The shopper can immediately obtain additional information about a product being displayed on the interactive screen saver with a click of their mouse. The shopper may return to the Live Browser by pressing a key.

The browser is based upon the following concepts. It provides consumers with a specialized PC Live Browser screensaver that turns their PC or like device such a web TV or mobile device into an advertising medium. The Live Browser streams specialized personalized multi-media content to each shopper's portal via a custom live browser and interactive screen saver application. The content including advertisements and product infomercials are targeted to the shopper based upon their shopper profile, brand preferences, and purchase history and family or consumer demographics. Registered ShopLive shoppers who wish to participate in the program can receive incentives such as free DSL Broadband or credits against subscription fees, discounts, coupons, rewards or prizes for their participation. The optional free DSL broadband typically is provided from an ISP or Telco provider who has partnered with Live Browser. In exchange for the incentives the shopper agrees to run the live browser on their PC on a 24/7 schedule.

Incentives can be earned through visiting a predefined number of ShopLive merchants on a periodic basis and participation in the ShopLive loyalty program, purchasing a certain dollar amount of products from ShopLive merchants on a periodic basis monthly, quarterly or annually or through coupon redemption. In exchange for this activity with ShopLive merchants various incentives are made available for the shopper including the subsidization of the cost of the DSL.

The Live Browser provides a new advertising outlet for ShopLive merchants and partners who are provided a dedicated audience for the media. Content consists of video, graphical and textual messages with sound, which are displayed to the shoppers PC via the browser. Content is personalized to the shopper to the shopper preferences as noted above. The shopper is able to click on an advertisement that interests them and be taken immediately to the merchant offering that product.

The Live browser provides the ability for the shopper to immediately connect with an SLA or a video merchant (via 404 Initiate Session) who can respond to any questions concerning the product or service offering. The Live browser is integrated with the other ShopLive offerings such as Rewards Live, Serve Live, Expert Live and Online Referrals. Access to these services can be triggered through the purchase of a product from a ShopLive merchant.

The Live browser provides the ability to stream infomercials and product demonstrations for shoppers based on their shopper profile. It supports all standard operating systems including windows, Linux and Macintosh. The Live browser supports the delivery of content from the Internet or traditional sources such as TV, Radio and satellite broadcasts and provides for future content delivery such as Internet radio, Internet TV or Internet Video.

The live Browser 2900 features two distinct components, a Live Browser, interactive screen saver and an Internet browser toolbar, both of which are integrated closely with the ShopLive applications. The downloadable plug-ins is smaller in size and is closely coupled with the ShopLive browser to allow exchange of information.

The Internet browser toolbar features a customizable ShopLive toolbar menu featuring one button access to ShopLive components as well as a reserved advertising area that displays personalized ShopLive content based upon the shopper's preferences.

The live browser interactive screensaver acts as a multi-media information channel, that stream personalized multi-media content to the shopper's idle PC based upon the shopper's recorded preferences.

The shopper is able to utilize the live browser functions by accessing the download live browser and toolbar function 2902, which manages the download and installation of the browser and ensures the shopper has the most recent version installed on their PC.

The browser login function 2904 allows the shopper to login onto the live browser control panel to have access to Live Browser and ShopLive toolbar controls. The shopper registration information is accessed using shopper profile data from the shopper profile information in tables 2930.

The manage shopper preferences function 2906 allows the shopper to interactively set the multi-media preferences for their live browser and toolbar. The browser allows the shopper to select from a wide variety of multi-media content (example - news, music videos, financial news, internet radio, advertisements and other multi-media content). The manage content delivery 2908 internal function manages the delivery of content from the various content providers to the live browsers and ShapLive toolbars based on the shopper's preferences. The function maintains the system tables containing the provider information and linking the content providers to their external sites.

The Process Notifications function 2910 manages the delivery of system notifications to the shopper's ShopLive session. The function 2910 automatically manages the delivery of live browser specific notifications using the ShopLive notification queues. The function detects whether the shopper is using the ShopLive application or the live browser is active and manages the notification delivery accordingly.

The ShopLive live browser tables 2930 are accessed by the various live browser functions to retrieve and update shopper data.

Referring to Figure 30, Onsite Personal Identification System 3000 provides a system for shoppers in Creations to carry a portable client identification 3004. Application logic can be distributed in varying degrees between the client and the server. For instance, a Smart Card carries application logic and a small database, where as a token or another type of identification device may have only id information with all other logic residing on the server 3002.

In the Smart Card 3008 Example, the client device carries information about the shopper and shopping experience, including the shopper's profile and shopping cart among others. There are other portable devices that carry this type of logic that function as effectively.

Other devices such as the token 3006, a Biometrics Device 3010, or any id card 3012 like the AirCard^{™} hold user identification material while the application logic resides on the server.

The Kiosk with Personal ID reader 3014 scans the client for necessary information and communicates with the Server Level 3002 to gather more information about the shopper and the shopping session Shopper id is processed by a process id function 3016 from Personal ID reader 3014and the data is read to the shopper data profiles 3030 for storage and updating.

This system provides a way for shoppers in the Creations environment to carry information from one kiosk to another and maintain a continuous shopping experience. This allows the shopper to shop at multiple booths and have one "shopping cart" at time of checkout. Additionally, this allows each merchant accessed by the Kiosk/Client combination to know identification information about the shopper so as to more personally and ultimately better server them.

Referring to Figure 31, Referral Server 3100 is an online Internet-based referral system that enables individuals and other business entities ("members") to refer shoppers for products and services, in return for compensation, that are sold from another member's Web site. The system includes automated registration software to allow entities to register as members. Following registration, the member can search a database and refer shoppers to other members' sites to purchase related products and services. Compensation for the referral is automatically credited to the account of the referring member. The disclosed system enhances a live interactive e-commerce transaction but is also of great benefit for conventional e-commerce transactions.

The Merchant Referral Registration Processor 3108 implements an online registration process allowing merchants to register as members of the referral network. Merchant 106, enrolling as a member provides the Referral Server System 3100 with a completed, online registration application that is processed by the Registration Processor 3108. The enrollment software creates an entry in the member database 3130 according to the information provided by the enrolling member.

The Registration Processor 3108 generates a unique member ID to be assigned to the member and communicates with the Purchase gateway 900 to complete purchase transactions. In addition, the enrollment software creates a database entry corresponding to the enrolling member and member the member ID and the information provided by the enrolling member as a unique entry in a member database 3130. This database entry allows the Referral Server System 3100 to properly track and credit member referrals, as further described below.

The computer program automatically formats and transmits a MBNQ to the approved member. This electronic message provides information about setting up a member's Web site, including instructions on how to create or access referral links. These instructions specify a predefined format for embedding the store ID and other information with the link structures. In addition, the message includes the unique store ID (generated by the enrollment software), and instructions.

When the shopper subsequently purchases a product and/or services as a result of the referral, the member's unique store ID is used to appropriately credit the member's account. During this process (or at the time of the referral) the Referral Server System 3100 determines whether the store ID represents a valid (enrolled) member.

Through the Shopping Portal 100, a shopper searches for a product or service 1312 and interrogates the member database 3130 that in turn accesses the member's site 106. During the transaction the member or Search Response Processor 3104 determines that the shopper needs a product, service, and/or intellectual asset not available at that site. The member or Search Response Processor 3104 conducts a search 3106 of the member database for members 3130 that can meet the shopper's needs and recommends one or more to the shopper. This search may be done prior to the shopper session in cases where the member can predict the need for certain referrals. The member receives compensation for the referral if the shopper buys as a result of the referral 1700. The Rewards Server 2300 processes this compensation as either a straight fee, a percentage fee, or by what other rules the member merchant implements.

The Referral Report Generation Processor 3110 automatically generates and transmits member feedback reports to respective members 3102. The software can be configured to generate the reports on a periodic basis. The report generation feature also may provide members with the ability to access an on-line menu to generate custom feedback reports (such as a report of the number of referrals during a specific period of time), or to set up report profiles that specify the content, format and frequency of the automated reports.

## Claims

1. A method for remotely controlling the remote viewing of merchandise by controlling a video camera in a first place where such merchandise is located, by a consumer's device in a second place via a computer communications network, said method comprising the steps of:
Connecting a communications network (300) to a consumer's device (310) to allow said consumer's device (310) to have access to a portal (100) communicating through the communications network (310) with a video camera (2702) that can be manipulated by the consumer's device by means of signals transmitted by the communications network (300) from the second place to the first place;
Obtaining digital images of the items of merchandise using such video camera (2702);
Displaying in the second place via the communication network (300), images selections of merchandise to be shown in the consumer's device (310) from the first place through the portal (100) communicating with the communications network (310);
Activating the video camera (2702) to view in digital form and in real time a plurality of images of the selected merchandise;
wherein such method is **characterized in that** it comprises the step of:
Receiving from the consumer's device (310) in the second place through said communications network (300), signals to manipulate the camera (2702) for viewing different images of such merchandise, wherein the images are transmitted from such first place to the consumer's device 310 in such second place via the communications network (300) in real time.

2. The method of claim 1, wherein a designated area of said first place where the merchandise is located comprises a grid having defined grid sections, wherein each grid section is associated with specific merchandise for placement of the merchandise for viewing by the video camera (2702), wherein the area and location of each said grid sections in said first place are defined by physical dimensions of said first place and by the placement of said video camera (2702).

3. The method of claim 2, wherein the method further comprising the steps of:
- receiving an input by a merchant in the merchandise area by which merchandise details are provided to the communications network,
- providing the merchandise details to the consumer's device (310) and offering the possibility to choose the merchandise the details of which are provided,
- receiving an input by the consumer's device whether or not to add the merchandise to the shopping cart
- using the merchandise details to complete a purchase.

4. The method of claim 3, wherein a merchant in said first place is given access to a customer profile information specific to a consumer.

5. The method of any of the proceeding claims, wherein, a real-time audiovisual link between said consumer device and a merchant sales assistant at said first place is provided.

6. The method of any of the proceeding claims, further comprising a plurality of video cameras (2702, 2704, 2706) disposed to cover overlapping designated merchandise display areas of said first place.
